(19) Europäisches Patentamt / European Patent Office / Office européen des brevets

(11) EP 2 289 976 B1

(12) # EUROPÄISCHE PATENTSCHRIFT

(45) Veröffentlichungstag und Bekanntmachung des Hinweises auf die Patenterteilung:
**28.11.2012 Patentblatt 2012/48**

(51) Int Cl.:
***C08G 77/46*** *(2006.01)* ***C08G 77/48*** *(2006.01)*
***C08L 83/12*** *(2006.01)*

(21) Anmeldenummer: **10167143.6**

(22) Anmeldetag: **24.06.2010**

(54) **Siliconpolyethercopolymere und Verfahren zu deren Herstellung**

Silicone polyether copolymers and method for their manufacture

Copolymères de silicone polyéther et leur procédé de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **24.07.2009 DE 102009034607**

(43) Veröffentlichungstag der Anmeldung:
**02.03.2011 Patentblatt 2011/09**

(73) Patentinhaber: **Evonik Goldschmidt GmbH**
**45127 Essen (DE)**

(72) Erfinder:
- **Henning, Frauke**
  **45130, Essen (DE)**
- **Schubert, Frank**
  **47506, Neukirchen-Vluyn (DE)**
- **Knott, Wilfried**
  **45355, Essen (DE)**
- **Dudzik, Horst**
  **45326, Essen (DE)**

(56) Entgegenhaltungen:
**EP-A1- 2 093 244**
**EP-A2- 0 506 086**
**WO-A1-89/03851**
**WO-A1-2005/078036**
**WO-A1-2010/063531**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 289 976 B1

Printed by Jouve, 75001 PARIS (FR)

## Beschreibung

Die Erfindung betrifft neuartige Siliconpolyethercopolymere und ein Verfahren zu deren Herstellung, bei dem ein mit Alkoxysilylgruppen endständig und/oder seitenständig modifizierter Polyether mit Silanen und/oder Siloxanen, die mindestens eine hydrolyselabile Gruppe tragen, allein oder im Gemisch mit Siloxanen, die keine hydrolyselabile Gruppe tragen, in einem Verfahrensschritt durch Hydrolyse- und Kondensationsreaktion umgesetzt werden.

Die erfindungsgemäßen Verbindungen stellen eine neue Klasse von Siliconpolyethercopolymeren dar, bei denen die Anbindung des Siloxankörpers an den Polyether über hydrolysestabile SiC-Bindungen stattfindet. Die neuartigen Verbindungen werden im Weiteren als Siliconpolyethercopolymere bezeichnet, auch wenn die Struktur gegebenenfalls nicht die Merkmale eines polymeren Ethers und/oder eines Silicons im Üblichen Sinn umfasst. Für den Fachmann ist jedoch die strukturelle Übereinstimmung von Polyetherstrukturelementen und Siliconen mit denen der neuartigen Verbindungen deutlich und klar ersichtlich.

Im Rahmen dieser Erfindung umfasst der Begriff Polyether sowohl Polyether, Polyetherole, Polyetheralkohole, Polyetherester aber auch Polyethercarbonate, die gegebenenfalls synonym zueinander verwendet werden. Dabei ist nicht erforderlich, dass der Ausdruck "poly" damit einhergehen muss, dass es sich um eine Vielzahl von etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse aufweisen und zudem auch noch eine gewisse Polydispersität aufweisen.
Das Wortfragment "POLY" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog der OECD- oder REACH-Richtlinien zu genügen scheinen.

Stand der Technik:

Polyethersiloxane sind vielseitig verwendbar, da man ihre Eigenschaften, insbesondere ihre Hydrophil/Hydrophob-Balance durch geeignete Wahl des Siloxanblockes oder der Siloxanblöcke einerseits und durch geeigneten Aufbau des Polyetherblockes oder der Polyetherblöcke beeinflussen und auf den gewünschten Wert einstellen kann.

Bei den Siliconpolyether-Copolymeren unterscheidet man prinzipiell zwischen SiOC- bzw. SiC-verknüpften Systemen. Während die hydrolyselabilen SiOC-verknüpften Systeme durch Reaktion von hydroxyfunktionellen Polyethern mit Chlorsiloxanen oder Alkoxysiloxanen herstellbar sind, werden die SiC-verknüpften Systeme durch die edelmetallkatalysierte Hydrosilylierung von meist einfach ungesättigten Polyethern mit Wasserstoffsiloxanen erhalten. Die edelmetallkatalysierte Hydrosilylierung von Allylpolyethern steht in Konkurrenz zu der Allyl-propenylumlagerung. Diese Nebenreaktion ist nicht nur deshalb unerwünscht, weil sie den Einsatz von überschüssigem Polyether erfordert und damit eine Produktverdünnung einhergeht, sondern der hydrolytische Abbau der Propenylpolyether führt zur Bildung von Propionaldehyd, der dem Produkt unter Anderem einen unangenehmen Geruch verleiht.

Die EP 0368195 A1 beschreibt sogenannte inverse Siliconpolyether-Copolymere, die im Gegensatz zu den geläufigen Strukturen mit einem zentralen Silicongerüst einen mehrfach ungesättigten Polyether als zentrales Gerüst aufweist, welches im zweiten Schritt durch Hydrosilylierung mit monofunktionellen Wasserstoffsiloxanen modifiziert wird. Der mehrfach ungesättigte Polyether wird mittels Alkoxylierung von Alkylenoxiden im Gemisch mit olefinisch ungesättigten Epoxiden, wie beispielsweise Allylglycidylether hergestellt. Das olefinische Epoxid kann statistisch verteilt oder blockweise in die Polyetherkette eingefügt werden, die bei alkalischer Katalyse üblicherweise bis zu einer Kettenlänge und damit Molmasse von etwa 4000 g/mol aufgebaut werden kann. Zwar beansprucht die EP-A1-0 368 195 einen Molgewichtsbereich von 650 g/mol bis 20.000 g/mol, offenbart werden jedoch lediglich Polyether mit Molgewichten von 1020 g/mol bis 1640 g/mol. Je nach Reaktionstemperaturen und Katalysatorkonzentrationen können die allylischen Doppelbindungen bereits während der alkalischen Alkoxylierung zu Propenylethern isomerisieren. Die allylischen Doppelbindungsanteile des so hergestellten mehrfach ungesättigten Polyethers können im Anschluss durch edelmetallkatalysierte Hydrosilylierung mit destillativ aufgereinigten SiH-funktionellen Silanen oder Siloxanen umgesetzt werden. Ein Vorteil der Lehre der EP-A1- 0 368 195 besteht darin, dass die Produkte nicht durch überschüssigen Propenylpolyether verdünnt werden. Die erhöhte Produktreinheit dieser inversen Polyethersiloxane wird in der EP-A1-0 368 195 anhand von Gelpermeationschromatogrammen offenbart. Dennoch konzediert die EP-A1-0 368 195, dass bei der Hydrosilylierung der mehrfach ungesättigten Polyether nur weniger als 90 mol-% der Allylgruppen umgesetzt werden und dass die verbleibenden ungesättigten Gruppen in Form von hydrolyselabilen Propenylfunktionen vorliegen. Das Problem der Geruchsbehaftung durch die hydrolytische Freisetzung von Propionaldehyd ist somit nicht gelöst. Da in der EP-A1-0 368 195 keine Viskositäten offenbart werden, erschließt sich nicht, ob es zu Molgewichts- und damit Viskositätsaufbau durch weitere, gegebenenfalls an die Allyl-propenyl-Umlagerung gekoppelte Nebenreaktionen während der Hydrosilylierung kommt. Wie dem Fachmann bekannt ist, führt bereits die Lagerung eines propenylhaltigen Polyethersiloxans bei Raumtemperatur zu Molmassenaufbau und Geruchsbildung. Um die Lagerstabilität zu verbessern und die Geruchsbehaftung zu vermeiden, offenbart der Stand der Technik diverse Desodorierverfahren, welche als zusätzlicher Verfahrensschritt die Kosten in die Höhe treiben.

Die EP-A1-0 506 086 beschreibt die Herstellung von inversen Siliconpolyether-Copolymeren in einem zweistufigen Verfahren. Im ersten Schritt wird ein mehrfach ungesättigter Polyether mit Triethoxysilan hydrosilyliert. Der erhaltene alkoxysilylfunktionelle Polyether wird dann unter hydrolytischen Bedingungen mit Trimethylchlorsilan unter Ausgasung von Chlorwasserstoff umgesetzt. Auch gemäß der Lehre der EP-A1-0 506 086 werden nur 85 mol-% der Allylgruppen hydrosilyliert. Im Vergleich zu einer einstufigen Hydrosilylierung von $((CH_3)_3SiO)_3SiH$, kurz M3T' genannt, an mehrfach ungesättigte Polyether bietet das zweistufige Verfahren über die Zwischenstufe des alkoxysilylfunktionellen Polyethers zwar höhere Gesamtausbeuten, jedoch sind in der Hydrosilylierstufe zur Lehre der EP-A1-0 368 195 vergleichbare Ausbeuteverluste durch die Allyl-propenylumlagerung zu verzeichnen. Zwar mag die Geruchsbehaftung des Endprodukts durch die hydrolytischen Bedingungen der zweiten Stufe und die destillative Aufarbeitung reduziert sein, dennoch handelt es sich hier nicht um eine hochselektive Reaktion, die zu hochreinen Produkten führt, da der Modifikationsgrad des Siliconpolyether-Copolymeren nur mittelbar durch die Rezeptur eingestellt werden kann und zudem stark von Prozessschwankungen in der Hydrosilylierung und dem damit verbundenen Ausmaß der Nebenreaktionen abhängig ist. Wie das in der EP-A1-0 506 086 offenbarte Beispiel II zeigt, erhält man bereits in der Hydrosilylierstufe ein viskoses Produkt, welches nach der in Beispiel III offenbarten Umsetzung mit Trimethylchlorsilan viskos bleibt. Da keine Viskositäten offenbart werden, erschließt sich nicht ob in der zweiten Stufe eine Viskositätszunahme oder - abnahme des bereits schon viskosen Produktes erfolgt. Wie dem Fachmann geläufig ist, sind Viskositätszunahmen bei Reaktionen ein Indiz für Molmassenaufbau, sei dies nun beispielsweise durch eine beabsichtige Kettenverlängerung verursacht oder aber auch durch eine unbeabsichtigte Quervernetzung von Polymerketten in einer Nebenreaktion bedingt.

Weitere prozesstechnische Nachteile des in EP-A1-0 506 086 offenbarten Verfahrens ergeben sich aus der Ausgasung von Chlorwasserstoff aus einer alkoholischen Lösung. Das stark korrosive Abgas muss in Wäschern aufgefangen werden. Sofern auch chlororganische Verbindungen als Nebenprodukte im Abgas enthalten sind, muss die Abluft weiter aufgereinigt werden.

Alkoxysilylfunktionelle Polymere unterschiedlichster chemischer Struktur finden u.a. Verwendung als reaktive, in Gegenwart von Feuchtigkeit aushärtbare Kleb- und Dichtstoffe, als Bindemittel, als Beschichtungs- und Oberflächenmodifizierungsnittel für unterschiedlichste anorganische und organische Substrate, darunter z.B. Partikel, Fasern, Gewebe und Flächengebilde aller Art, sowie auch als Rohstoffe für isocyanatfreie Dosenschäume (schäumbare Dicht- und Klebstoffe).

Bei einem besonders verbreiteten Typ von alkoxysilanfunktionellen Polymeren handelt es sich um alkoxysilanterminierte Präpolymere. Diese können aus unterschiedlichen Bausteinen aufgebaut sein. Üblicherweise besitzen diese Präpolymere ein organisches Rückgrat, d.h. sie sind beispielsweise aus Polyurethanen, Polyethern, Polyestern, Polyacrylaten, Polyvinylestern, Ethylen-Olefincopolymeren, Styrol-Butadiencopolymeren oder Polyolefinen aufgebaut, beschrieben z.B. in WO 2005/100482, EP-A1-1967550, US 7,365,145, US 3,627,722, US 3,632,557 sowie in US 3,971,751. Daneben sind aber auch Systeme verbreitet, deren Rückgrat ganz oder zumindest zum Teil aus Organosiloxanen besteht, beschrieben u.a. in WO 96/34030.

Die Umsetzung von alkoxysilylfunktionellen Polyethern mit Silanen oder Siloxanen führt im Stand der Technik im Sinne einer Aushärtung des reaktiven Materials zu Beschichtungen. Beispiele dafür sind die JP 2005113063 oder die JP 11012473.

Um eine gute <u>inter</u>molekulare Vernetzung bei der Aushärtung zu bewerkstelligen, werden meist trialkoxyfunktionelle Silane wie beispielsweise Methyltriethoxysilan, teils auch im Gemisch mit Dimethyldiethoxysilan, und/oder tetraalkoxyfunktionelle Silane wie Tetraethoxysilan, oder auch deren Hydrolysate verwendet. Da die molare Bindungsenergie einer Silicium-Sauerstoff-Bindung mit 444 kJ/mol (Quelle: Hollemann-Wiberg, Lehrbuch der Anorganischen Chemie, 101. Auflage, S. 141) deutlich über der Bindungsenergie einer Kohlenstoff-Sauerstoff-Bindung von 358 kJ/mol liegt, ist der Aufbau eines makromolekularen Netzwerks thermodynamisch bevorzugt.

Die Vielzahl der beschriebenen Synthesezugänge zu alkoxysilanterminierten Präpolymeren offenbart lediglich die Silanfunktionalisierung an den Kettenenden der Präpolymere. Die noch unveröffentlichte Patentanmeldung DE 10 2008 000360.3 beschreibt ein Verfahren zur Herstellung von alkoxysilylfunktionellen Polyethern, die eine Silanfunktionalisierung sowohl in der Polymerkette als auch am Kettenende erlaubt.

Die Aufgabe der vorliegenden Erfindung bestand somit darin, durch ein grundsätzlich anderes Syntheseverfahren Zugang zu neuartigen, propenylethergruppenfreien, mit Alkoxysilylgruppen, Alkoxysiloxanylgruppen und/oder Siloxanylgruppen - einzeln oder in Mischung miteinander - modifizierten Polyethern zu schaffen.

Eine weitere Aufgabe der vorliegenden Erfindung ist die Bereitstellung eines Verfahrens zur Herstellung dieser neuartigen Siliconpolyethercopolymere in Form von lagerstabilen Verbindungen, die frei von störenden Nebenprodukten sind. Lagerstabilität im Sinne der vorliegenden Erfindung bedeutet, dass die Viskosität des Endproduktes bei Wasserausschluss und Lagerung bei Raumtemperatur nach einem Jahr noch keine signifikante Viskositätszunahme von mehr als 20% des Ausgangswertes aufweist. Dies ist insbesondere für hochmolekulare Produkte mit Molmassen über 10.000 g/mol, bevorzugt über 20.000 g/mol wichtig, da die Ausgangsviskosität dieser Produkte bereits so hoch ist, dass es zur Vergelung nur einer minimalen, spektroskopisch nicht nachweisbaren Menge quervernetzter Ketten bedarf.

Der Viskositätsaufbau ist beispielsweise bedingt durch Vergelung, ausgelöst durch intermolekulare Hydrolyse- und Kondensationsreaktionen der Alkoxysilylgruppen oder durch vernetzende Nebenreaktionen in Anwesenheit von Propenylethergruppen.

Gelöst werden die Aufgaben durch die Herstellung neuartiger Siliconpolyethercopolymere der Formel (1) mit bisher nicht herstellbarer inverser chemischer Struktur.

Gegenstand der vorliegenden Erfindung sind propenylethergruppenfreie Verbindungen, die Siliconpolyethercopolymeren gemäß Formel (1) entsprechen

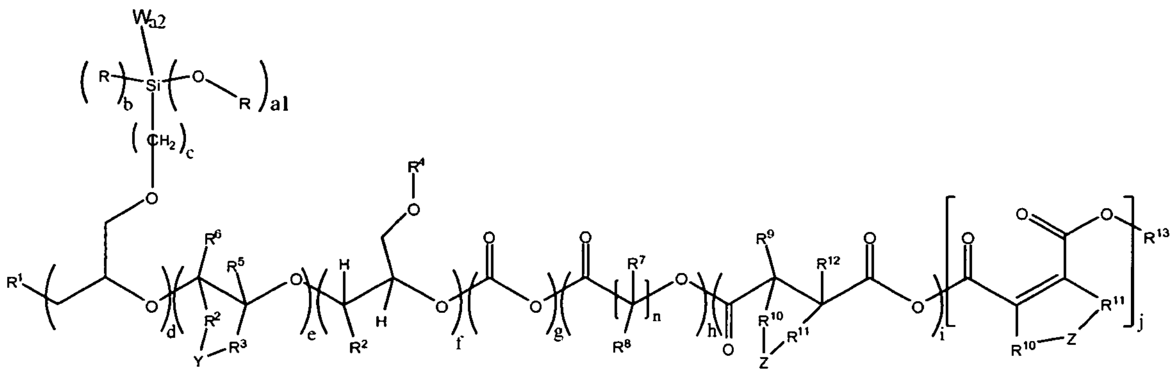

Formel (1) - siehe auch Figur 1

wobei

| | |
|---|---|
| a1 | eine ganze Zahl von 0, 1 oder 2 ist, |
| a2 | eine ganze Zahl von 1, 2 oder 3 ist, |
| b | eine ganze Zahl von 0, 1 oder 2, vorzugsweise 0 oder 1, besonders bevorzugt 0 ist, und die Summe von a1, a2 und b gleich 3 ist, |
| c | eine ganze Zahl von 0 bis 22, vorzugsweise von 0 bis 12, besonders bevorzugt von 0 bis 8, ganz besonders bevorzugt von 0 bis 4 und insbesondere gleich 1 oder 3 ist, |
| d | eine ganze Zahl von 1 bis 500 ist, bevorzugt 1 bis 100, besonders bevorzugt 2 bis 20 und ganz besonders bevorzugt 2 bis 10, |
| e | eine ganze Zahl von 0 bis 10.000, bevorzugt 1 bis 2000, besonders bevorzugt 2 bis 2000 und insbesondere 2 bis 500 ist, |
| f | eine ganze Zahl von 0 bis 1.000, bevorzugt 0 bis 100, be- sonders bevorzugt 0 bis 50 und insbesondere 0 bis 30 ist, |
| g | eine ganze Zahl von 0 bis 1.000, bevorzugt 0 bis 200, be- sonders bevorzugt 0 bis 100 und insbesondere 0 bis 70 ist, |
| h, i und j | unabhängig voneinander ganze Zahlen von 0 bis 500, bevorzugt 0 bis 300, besonders bevorzugt 0 bis 200 und ins- besondere 0 bis 100 sind, |
| n | eine ganze Zahl zwischen 2 und 8 ist |

und

| | |
|---|---|
| R | unabhängig voneinander einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen darstellt. Bevorzugt entspricht R Methyl-, Ethyl-, Propyl-, Isopropyl-, n-Butyl- und sek.-Butylgruppen; sowie, |
| $R^1$ | ist eine Hydroxylgruppe oder ein gesättigter oder ungesättigter linearer, verzweigter oder cyclischer oder weiter substituierter oxyorganischer Rest mit 1 bis 1.500 Kohlenstoffatomen, wobei |

die Kette auch durch Heteroatome wie O, S, Si oder N unterbrochen sein kann, oder ein oxyaromatisches System enthaltender Rest oder $R^1$ ist eine ungesättigte etherfunktionelle Gruppe, bei der keine C-C-Doppelbindung β-ständig zu einem Sauerstoff ist oder C-C-Doppelbindungen besonders bevorzugt nur endständig vorliegen, vorzugsweise eine Alkoxy-, Arylalkoxy- oder Alkylarylalkoxygruppe und insbesondere ein Polyetherrest, bei dem die Kohlenstoffkette durch Sauerstoffatome unterbrochen sein kann, oder eine einfach oder mehrfach annelierte oxyaromatische Gruppe oder ein gegebenenfalls verzweigter siliconhaltiger organischer Rest

$R^2$ oder $R^3$ sind gleich oder auch unabhängig voneinander H und/oder ein gesättigter und/oder einfach und/oder mehrfach ungesättigter, auch weiter substituierter, gegebenenfalls ein- oder mehrwertiger Kohlenwasserstoffrest, wobei die Reste $R^2$ und $R^3$ cycloaliphatisch über das Fragment Y verbrückt sein können; Y kann nicht vorhanden sein, oder aber eine Methylenbrücke mit 1 oder 2 Methyleneinheiten sein; ist Y nicht vorhanden, so ist der Kohlenwasserstoffrest für $R^2$ oder $R^3$ unabhängig voneinander ein linearer oder verzweigter Rest mit 1 bis 20 Kohlenstoffatomen; $R^5$ oder $R^6$ sind gleich oder auch unabhängig voneinander H und/oder ein gesättigter und/oder einfach und/oder mehrfach

$R^4$ ungesättigter, auch weiter substituierter einwertiger Kohlenwasserstoffrest; entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann;

$R^7$ und $R^8$ sind unabhängig voneinander entweder Wasserstoff, Alkyl-, Alkoxy-, Aryl- oder Aralkylgruppen,

$R^9$, $R^{10}$, $R^{11}$ und $R^{12}$ sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein kann und Z sowohl einen divalenten Alkylen- als auch Alkenylenrest darstellen kann,

$R^{13}$ ist entweder Wasserstoff oder W, besonders bevorzugt Wasserstoff,

W stellt einen linearen oder verzweigten oder cyclischen organomodifizierten Silyl- oder Siloxanylrest der Formel (2) dar

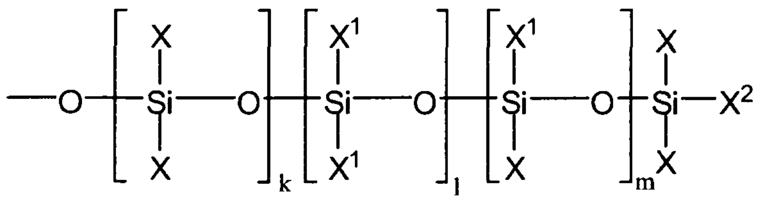

Formel (2)

wobei

k eine ganze Zahl von 0 bis 200, vorzugsweise 0 bis 50 und insbesondere 0 bis 5 ist

l eine ganze Zahl von 0 bis 200, vorzugsweise 0 bis 50 und insbesondere 0 bis 5 ist

m eine ganze Zahl von 0 bis 200, vorzugsweise 0 bis 50 und insbesondere 0 bis 5 ist

X ein linearer, cyclischer oder verzweigter, aliphatischer oder aromatischer, gesättigter oder ungesättigter Kohlen- wasserstoffrest mit 1 bis 20 Kohlenstoffatomen ist, der ggfs. Heteroatome wie Sauerstoff, Stickstoff, Phosphor oder Schwefel enthalten kann, der jedoch vorzugsweise eine Me- thylgruppe ist,

$X^1$ Wasserstoff oder ein linearer, cyclischer oder verzweigter, aliphatischer oder aromatischer, gesättigter oder ungesät- tigter Kohlenwasserstoffrest mit 1 bis 20 Kohlenstoffatomen ist und Heteroatome wie Sauerstoff, Stickstoff, Phosphor oder Schwefel enthalten kann, jedoch unterschiedlich von X ist,

$X^2$ X, $X^1$ oder eine Alkoxygruppe ist,

mit der Maßgabe, dass die Summe der Fragmente d bis j größer gleich 3 ist wenn $R^1$ nur aus einem Monomer oder Oligomer besteht und mit der Maßgabe, dass die Fragmente mit den Indices d, e, f und/oder h untereinander sowie die Fragmente mit den Indices k, 1 und/oder m untereinander frei permutierbar, das heißt innerhalb der Polyetherkette beziehungsweise der Siloxankette gegeneinander austauschbar sind und wahlweise statistisch verteilt oder blockartig aneinandergereiht vorliegen können und damit in der Sequenz innerhalb der Polymerkette gegeneinander austauschbar sind.

Die verschiedenen Monomereinheiten sowohl der Fragmente mit den Indexzahlen d bis f und h, sowie k bis m

als auch der eventuell vorhandenen Polyoxyalkylenkette des Substituenten $R^1$ können untereinander blockweise aufgebaut sein oder aber auch einer statistischen Verteilung unterliegen.

Diese neuen Verbindungen, im Weiteren als Siliconpolyethercopolymere bezeichnet, können aus hoch alkoxysilylfunktionellen organischen Polymeren mit einer Funktionalitätsdichte von bis zu 4 Trialkoxysilyläquivalenten pro 1000 g/mol vergelungsfrei durch wahlweise vollständige oder partielle Hydrolyse- und Kondensationsreaktion der polymergebundenen Alkoxysilylgruppen mit reaktiven Silanen, vorzugsweise monomeren hydrolytisch spaltbaren Alkoxy- oder Acyloxysilanen, ggfs. weiteren reaktiven Siliciumverbindungen sowie Wasser und bei Bedarf in Anwesenheit eines Katalysators erhalten werden. Die neuen ebenfalls erfindungsgemäßen Verbindungen stellen eine neue Klasse von Siliconpolyethercopolymeren dar, bei denen die Anbindung des Siloxankörpers an den Polyether über hydrolysestabile SiC-Bindungen stattfindet.

Es ist ein besonderes Unterscheidungsmerkmal und ein technischer Vorteil dieser neuen Klasse von Siliconpolyethercopolymeren gegenüber herkömmlich über die Route der edelmetallkatalysierten Hydrosilylierung gewonnenen technischen Polyethersiloxane, dass sie keine sogenannten Überschusspolyether enthalten, die in konventionell hergestellten Produkten meist 20-40 Gew.-% des Gesamtprodukts ausmachen und dem System eine oftmals in tensidischen Anwendungen ungewünschte erhöhte Hydrophilie verleihen. Die erfindungemäßen Siliconpolyether stellen somit hinsichtlich des Fehlens freier organischer Polyetheranteile neuartige Copolymere dar. Ihre chemische Zusammensetzung und damit ihre Hydrophil-Hydrophob-Balance sind über die flexible Wahl der Synthesebedingungen in weiten Bereichen steuerbar. So lassen sich die Länge und Anordnung des hydrophoben Siloxankörpers und die des meist hydrophileren Polyetherteils in weiten Bereichen reproduzierbar einstellen.

Ein weiterer Vorteil dieser neuen Klasse von Siliconpolyethercopolymeren besteht darin, dass keine Nebenreaktionen zur Bildung von Propenylethern führen, die bei Lagerung des Produkts unter Einwirkung von Luftfeuchtigkeit hydrolytisch zersetzt werden. Es wird daher kein Propionaldehyd freigesetzt, der zu einer unerwünschten Geruchsbehaftung des Produkts führen könnte.

Anders als herkömmlich via Hydrosilylierung hergestellte Siliconpolyether bietet das erfindungsgemäße Verfahren darüber hinaus Zugang zu reaktiven Alkoxysilylgruppen tragenden Siliconpolyethern, deren Polyetherteil mit hydrolytisch vernetzbaren Alkoxysilyl- und/oder Alkoxysiloxanylgruppen funktionalisiert ist. Bei geeigneter Wahl der Reaktionsbedingungen im erfindungsgemäßen Herstellverfahren, wie beispielsweise einer zu den Trialkoxysilylgruppen unterstöchiometrischen Bemessung von Monoalkoxysilan und Wasser von weniger als drei Äquivalenten Monoalkoxysilan und weniger als 1,5 Molen Wasser pro Trialkoxysilyl-Äquivalent, werden so reaktive, hydrolysierbare Siliconpolyether erhalten, deren Silicongehalt über den Umsetzungsgrad der Alkoxysilylgruppen zu Siloxanylgruppen einstellbar ist.

Überraschenderweise wurde nun gefunden, dass die säurekatalysierte und/oder Metallkomplex-katalysierte, hydrolytische Umsetzung von alkoxysilylfunktionellen Polyethern mit reaktiven Silanen wie Alkoxysilanen und/oder Siloxanen zu propenylethergruppenfreien inversen Siliconpolyethercopolymeren führt. Die Propenylgehalte werden $^1H$-NMR-spektroskopisch bestimmt und liegen im Fall der vorliegenden Erfindung bei Gehalten von kleiner 1 Gew.-%, bevorzugt kleiner 0,1 Gew.-% der C-C-Doppelbindunganteile.

Während der Reaktion werden keine neuen C-C-Doppelbindungen aufgebaut und der Anteil an C-C-Doppelbindungen im Polymer bleibt unbeeinflusst.

Die erfindungsgemäß beschriebene säurekatalysierte und/oder Metallkomplex-katalysierte, hydrolytische Umsetzung ist für den Fachmann überraschend und war in keiner Weise vorhersehbar, da der Stand der Technik nur die weitgehende Vergelung durch intermolekulare Vernetzung von alkoxysilylfunktionellen Polyethern, reaktiven Silanen wie Alkoxysilanen oder -siloxanen in Gegenwart von Wasser kennt.

Da in den Alkoxysilanen und den Siloxanen im Vergleich zu den Chlorsilanen eine Silicium-Sauerstoff-Bindung bereits vorliegt, ist zu erwarten, dass Reaktionen mit Alkoxysilanen und alkoxysilylfunktionellen Polyethern langsamer verlaufen als die Reaktionen mit Chlorsilanen und zudem von Nebenreaktionen begleitet sind wie beispielsweise der Vergelung durch intermolekulare Vernetzung zwischen den alkoxysilylfunktionellen Polyethern. Umso überraschender ist der hier offenbarte Befund, dass mittels einer säurekatalysierten und/oder Metallkomplexkatalysierten, hydrolytischen Umsetzung von alkoxysilylfunktionellen Polyethern mit Alkoxysilanen und/oder Siloxanen vergelungsfreie Produkte erhalten werden.

Nach dem erfindungsgemäßem Verfahren werden Siliconpolyethercopolymere der Formel (1) durch Hydrolyse- und Kondensationsreaktion polymergebundener Alkoxysilylgruppen eines organischen Polymers, insbesondere eines alkoxysilylfunktionellen Polyethers gewonnen.

Ein weiterer Gegenstand der Erfindung sind bevorzugt Siliconpolyethercopolymere gemäß Formel (1) mit der Maßgabe, dass $R^1$ ein Hydroxylrest oder ein gesättigter, gegebenenfalls verzweigter oxyorganischer Rest ist oder ungesättigt ist, jedoch keine nichtaromatische C-C-Doppelbindung $\beta$-ständig zu einem Sauerstoff enthält.

Ein weiterer Gegenstand der Erfindung sind somit auch besonders bevorzugt Siliconpolyethercopolymere gemäß Formel (1) mit der Maßgabe, dass $R^1$ ein gesättigter Alkoxy oder Polyetherrest ist.

Die erfindungsgemäß mit Wasser und mit mindestens einem monomeren reaktiven Silan und evtl. weiteren Siliciumverbindungen unter gegebenenfalls äquilibrierenden Bedingungen an ihren Alkoxysilylgruppen modifizierbaren

Polyether, im Weiteren Silylpolyether genannt, sind Verbindungen der Formel (3). Derartige Silylpolyether können durch Doppelmetallcyanid (DMC)-katalysierte Alkoxylierungsreaktion von epoxyfunktionellen Silanen und evtl. weiteren Epoxiden an einer OH-funktionellen Startverbindung $R^1$-H (4) gewonnen werden.

Die Herstellung und die einsetzbaren Epoxid-Strukturtypen sind ausführlich in der nicht vorveröffentlichen DE 10 2008 000360.3 beschrieben. Die so hergestellten Verbindungen enthalten die modifizierbaren Alkoxysilylfunktionen wahlweise terminal, als auch isoliert, blockartig kumuliert als aber auch statistisch eingestreut in der Polyoxyalkylenkette.

Die Silylpolyether der Formel (3) zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, mit der Einschränkung, dass cyclische Anhydride (Indices i und j) sowie Kohlendioxid (Index g) statistisch insertiert, also nicht in homologen Blöcken, in der Polyetherstruktur vorliegen.

Werden in der Alkoxylierung gemäß DE 10 2008 000360.3 mehrfach epoxyfunktionelle Alkoxysilane als Monomer eingesetzt, entstehen Silylpolyether der Formel (3), die hochfunktionalisierte Netzwerke bilden, bei denen Polyetherketten, die jeweils von $R^1$-H gestartet sind und die in ihrer Abfolge die frei permutierbaren Fragmente enthalten, die durch die Reaktion unter Ringöffnung der Reaktionskomponenten in die entstehende Polymerkette eingefügt wurden, über $-CH_2-O-(CH_2)_c-Si-(CH_2)_c-O-CH_2-$Brücken miteinander verknüpft sind. Es entstehen also hochkomplexe, hochfunktionalisierte Strukturen. Auch hier lassen sich die Funktionalitäten gezielt auf ein gewünschtes Anwendungsgebiet einstellen. Der Vernetzungsgrad und die Komplexität der erhaltenen Polymerstrukturen steigen mit zunehmender Epoxyfunktionalität der Silylmonomere. Ganz besonders bevorzugt sind 3-Glycidyloxyalkyltrialkoxysilane als Monomere.

Dabei können die Fragmente, die durch die Reaktion unter Ringöffnung in die entstehende Polymerkette eingefügt wurden, im Rahmen der vorhergehenden Definitionen blockartig oder statistisch verteilt, nicht nur in der Kette einer Polyether-Struktureinheit vorkommen, sondern auch statistisch verteilt über die Vielzahl der gebildeten und über $-CH_2-O-(CH_2)_c-Si-(CH_2)_c-O-CH_2-$Brücken miteinander verbundenen Polyetherstruktureinheiten, vorkommen. Die Mannigfaltigkeit der Strukturvariationen der Verfahrensprodukte gestattet damit keine absolut eindeutige formelmäßige Beschreibung.

Bevorzugt werden als Silylpolyether solche der Formel (3) eingesetzt, die ausgehend von einer Startverbindung $R^1$-H gebildet werden

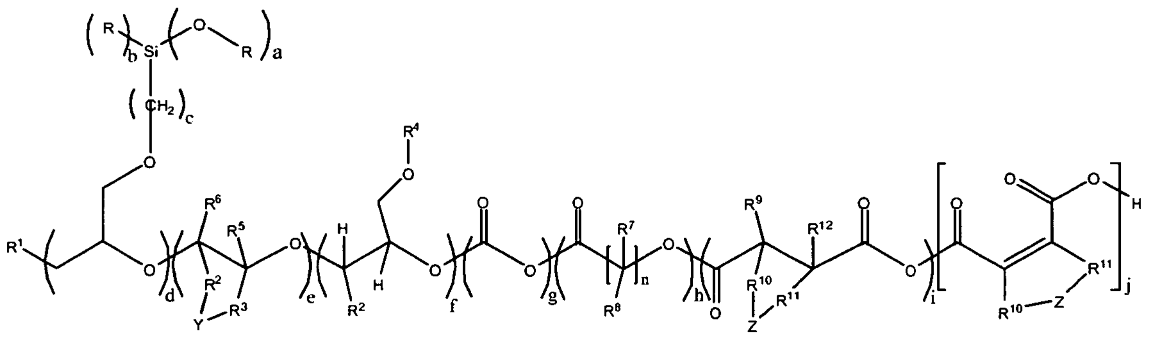

(3) - siehe auch Figur 2

wobei

| | |
|---|---|
| a | eine ganze Zahl von 1 bis 3, vorzugsweise 3 ist, |
| b | eine ganze Zahl von 0 bis 2, vorzugsweise 0 bis 1, besonders bevorzugt 0 ist, und die Summe von a und b gleich 3 ist, die Indices |
| c, d, e, f, g, h, i und j | sowie die Reste R, $R^1$ bis $R^{12}$ sowie Y und Z den bei Formel (1) definierten Bedeutungen entsprechen. |

Die verschiedenen Monomereinheiten sowohl der Fragmente mit den Indexzahlen d bis f und h als auch der eventuell vorhandenen Polyoxyalkylenkette des Substituenten $R^1$ können untereinander blockweise aufgebaut sein oder aber auch einer statistischen Verteilung unterliegen.

Unter Startverbindungen werden Substanzen verstanden, die den Anfang (Start) des herzustellenden Polyethermoleküls (3) bilden, das durch die Anlagerung von epoxidfunktionellen Monomeren erhalten wird.

$R^1$ ist ein Fragment, das dem Starter oder den Startverbindungen für die Alkoxylierungsreaktion entstammt gemäß Formel (4)

$R^1$-H (4)

(das H gehört zur OH-Gruppe eines Alkohols oder einer phenolischen Verbindung), wobei Starter der Formel (4) allein oder in Mischungen miteinander eingesetzt werden können und mindestens eine reaktive Hydroxylgruppe aufweisen; der Starter kann somit auch Wasser sein.

Als OH-funktionelle Startverbindungen $R^1$-H (4) werden vorzugsweise Verbindungen mit Molmassen von 18 (Wasser) bis 10.000 g/mol, insbesondere 50 bis 2000 g/mol und mit 1 bis 8, bevorzugt mit 1 bis 4 Hydroxylgruppen eingesetzt.

Bevorzugt werden als Starter der Formel (4) solche eingesetzt, bei denen $R^1$ eine Hydroxylgruppe oder ein gesättigter oder ungesättigter linearer, verzweigter oder cyclischer oder weiter substituierter oxyorganischer Rest mit 1 bis 1.500 Kohlenstoffatomen ist, der gegebenenfalls auch durch Heteroatome wie O, S, Si oder N unterbrochen sein kann, oder ein oxyaromatisches System enthaltender Rest; oder $R^1$ ist eine ungesättigte etherfunktionelle Gruppe, bei der keine C-C Doppelbindung β-ständig zu einem Sauerstoff ist oder C-C Doppelbindungen besonders bevorzugt nur endständig vorliegen, vorzugsweise eine Alkoxy-, Arylalkoxy- oder Alkylarylalkoxygruppe und insbesondere ein Polyetherrest, bei dem die Kohlenstoffkette durch Sauerstoffatome unterbrochen sein kann, oder eine einfach oder mehrfach annelierte oxyaromatische Gruppe oder ein gegebenenfalls verzweigter siliconhaltiger organischer Rest.

Weiterhin kann $R^1$-H ein oxyalkylfunktionelles Siloxan oder ein oxyfunktionelles Polyethersiloxan darstellen.

Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Vorzugsweise sind die Verbindungen der Formel (4) ausgewählt aus der Gruppe der Alkohole, Polyetherole oder Phenole. Bevorzugt wird als Startverbindung ein ein- oder mehrwertiger Polyetheralkohol oder Alkohol $R^1$-H (das H gehört zur OH-Gruppe des Alkohols oder Phenols) oder auch Wasser eingesetzt. Vorteilhaft werden niedermolekulare Polyetherole mit 1 bis 8 Hydroxylgruppen und Molmassen von 50 bis 2000 g/mol, die ihrerseits zuvor durch DMC-katalysierte Alkoxylierung hergestellt wurden, als Starterverbindungen (4) verwendet.

Beispielhaft für Verbindungen der Formel (4) seien Wasser, Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt. Neben Verbindungen mit aliphatischen und cycloaliphatischen OH-Gruppen eignen sich beliebige Verbindungen mit 1 bis 20 phenolischen OH-Funktionen. Hierzu gehören beispielspweise Phenol, Alkyl- und Arylphenole, Bisphenol A und Novolake.

Silylpolyether der Formel (3) bestehen aus Alkoxysilylgruppen substituierten Ketten, die durch die Wahl der Fragmente d bis j, entsprechend der durch die Reaktion unter Ringöffnung der Reaktionskomponenten in die Polymerkette eingefügten Fragmente, gezielt hochfunktionalisiert sind und damit für verschiedenartige Anwendungsgebiete zugeschnitten werden können.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (1), (2) oder (3).

Je nach verwendetem epoxidfunktionellem Alkoxysilan und evtl. eingesetzten weiteren Monomeren, sowie evtl. auch Kohlendioxid können ester- oder carbonat-modifizierte Silylpolyether erhalten werden. Bevorzugt ist die Alkoxysilaneinheit in der Verbindung der Formel (3) eine Trialkoxysilaneinheit.

Wie $^{29}$Si-NMR- und GPC-Untersuchungen ergeben, bedingt das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die Alkoxylierungsprodukte neben den nicht umgeesterten Spezies, wie sie in Formel (3) wiedergegeben sind, solche mit der doppelten, zum Teil dreifachen oder gar vielfachen Molmasse enthalten. Formel (3) gibt mithin die komplexe chemische Realität nur vereinfacht wieder. Monomodal im Sinne der vorliegenden Erfindungen bedeutet das Vorhandensein von nur einem Maximum im Gelpermeationschromatogramm, während bei einer multimodalen Verteilung mindestens ein weiteres Lokalmaximum abseits des Hauptpeaks vorliegt. Eine multimodale Verteilung kann durch Umesterungsreaktionen während des Herstellprozesses der Silylpolyether verursacht sein oder auch durch andere verfahrenstechnische Einstellungen wie beispielsweise

eine bestimmte gewählte Dosagesequenz von Starter und Epoxidmonomeren. Das Vorliegen von Umesterungsprodukten im Silylpolyether bedingt somit nicht zwangsweise eine multimodale Molgewichtsverteilung. Der Grad der Umesterung an der Silylgruppe kann unabhängig von der Molgewichtsverteilung anhand von $^{29}$Si-NMR Spektren bestimmt werden.

Somit stellen die Silylpolyether der Formel (3) Zusammensetzungen dar, die auch Verbindungen enthalten, in denen die Summe der Indizes (a) plus (b) in Formel (3) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von ROH und Kondensationsreaktion mit der reaktiven OH-Gruppe eines weiteren Moleküls der Formel (3) ausgebildet werden. Diese Reaktion kann mehrfach ablaufen bis z.B. alle RO-Gruppen am Silizium gegen weitere Moleküle der Formel (3) ausgetauscht sind. Das Vorhandensein von mehr als einem Signal in typischen $^{29}$Si-NMR-Spektren dieser Verbindungen untermauert das Auftreten von Silylgruppen mit unterschiedlichem Substitutionsmuster.

Die angegebenen Werte und Vorzugsbereiche für die Indizes (a) bis (j) sind somit auch nur als Mittelwerte über die verschiedenen, einzeln nicht fassbare Spezies zu verstehen. Die Vielfalt an chemischen Strukturen und Molmassen spiegelt sich auch in den für Silylpolyether der Formel (3) typischen und für konventionelle DMC-basierende Polyether völlig ungewöhnlichen breiten Molmassenverteilungen von $M_w/M_n$ von meist $\geq$ 1,5 wider.

Weiterhin Gegenstand der Erfindung ist das im Folgenden genannte Verfahren zur Herstellung von neuartigen Siliconpolyethercopolymeren, mit dem vergelungsfreie Produkte erhalten werden.

Beim erfindungsgemäßen Herstellverfahren werden mit Alkoxysilylgruppen funktionalisierte Polyether der Formel (3) unter hydrolytischen Bedingungen und Säurekatalyse und/oder Metallkomplexkatalyse mit reaktiven, hydrolytisch spalt- und kondensierbaren Silanen und/oder Siloxanen wie beispielsweise Alkoxysilanen umgesetzt. Siloxane im Sinne dieser Erfindung sind solche der Formel (5),

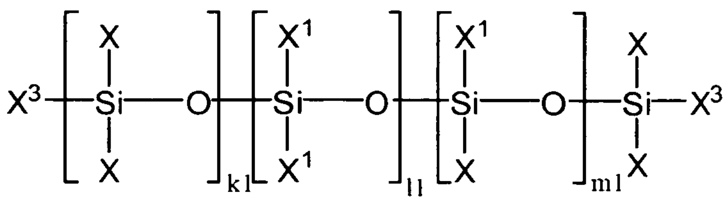

Formel (5)

wobei

| | |
|---|---|
| X und $X^1$ | die in Formel (2) definierte Bedeutung haben, |
| $X^3$ | eine Hydroxylgruppe oder $X^2$ gemäß der Definition in Formel (2) ist, |
| k1 | eine ganze Zahl von 0 bis 200, vorzugsweise 0 bis 50 und insbesondere 0 bis 5 ist |
| l1 | eine ganze Zahl von 0 bis 200, vorzugsweise 0 bis 50 und insbesondere 0 bis 5 ist |
| m1 | eine ganze Zahl von 0 bis 200, vorzugsweise 0 bis 50 und insbesondere 0 bis 5 ist |

mit der Maßgabe, dass die Summe der Indizes k1, l1 und m1 eine ganze Zahl von 1 bis 600, vorzugsweise 1 bis 150 und insbesondere 1 bis 15 ist.

Die verwendeten reaktiven Silane, bevorzugt Alkoxysilane, sind Verbindungen der Formel (6)

$$U_xSiV_{(4-x)} \qquad (6)$$

wobei U gleiche oder verschiedene, in Anwesenheit von Wasser und katalytischer Mengen Brönstedt-Säure bei Temperaturen bis 100°C nicht hydrolysierbare Gruppen, V = gleiche oder verschiedene in Anwesenheit von Wasser und katalytischer Mengen Brönstedt-Säure bei Temperaturen bis 100°C hydrolysierbare Gruppen oder Hydroxylgruppen und x = 1, 2 oder 3 darstellt.

Hydrolysierbar bedeutet im Rahmen dieser Erfindung, dass mindestens 80 % der Gruppen unter den gewählten Bedingungen hydrolysiert und damit abgespalten werden können.

In Formel (6) können die hydrolysierbaren Gruppen V beispielsweise H, Halogen-, Alkoxy- (bevorzugt Methoxy-, Ethoxy-, i-Propoxy-, n-Propoxy- oder Butoxy-), Aryloxy- (bevorzugt Phenoxy-), Acyloxy- (bevorzugt Acetoxy- oder Propionyloxy-), Acyl-(bevorzugt Acetyl-), Amino-, Monoalkylamino- oder Dialkylamino-Gruppen oder Sulfonsäureestergruppen sein. Der nicht hydrolysierbare Rest U kann beispielsweise ein Alkyl-, Alkenyl-, Alkinyl-, Aryl-, Alkylaryl- oder Aralkyl-Rest sein. Die Alkylkette kann 0 bis 50, vorzugsweise 0 bis 22 Kohlenstoffatome aufweisen oder auch ein Siliconrest sein. Die Reste U und V können ggf. einen oder mehrere übliche Substituenten, wie beispielsweise Halogen oder Alkoxy aufweisen.

Nicht hydrolysierbare Reste U nach der Formel (6) mit funktionellen Gruppen können ausgewählt werden aus dem Bereich der Methacryloxyalkylen- und Acryloxyalkylen-Reste, wie beispielsweise Methacryloxymethyl, Acryloxymethyl, Methacryloxyethyl, Acryloxyethyl, Methacryloxypropyl, Acryloxypropyl, Methacryloxybutyl und dem Acryloxybutyl-Rest.

Bevorzugt enthalten Silane der Formel (6) eine bis zwei Abgangsgruppen V in Form von Alkoxygruppen, Acyloxygruppen, Chlorgruppen oder auch Sulfonsäureestergruppen, wie beispielsweise Trimethylmethoxysilan, Triphenylmethoxysilan, Trimethylethoxysilan, Triphenyl-ethoxysilan, Triphenylsilanol, Trimethylisopropoxysilan, Trimethyl-n-propoxysilan, Trimethylchlorsilan, Trimethylacetoxysilan, Trifluormethansulfonsäuretrimethylsilylester, Trifluoressigsäuretrimethylsilylester, Dimethyldimethoxysilan, Diphenyldimethoxysilan, Dimethyldiethoxysilan, Diphenyldiethoxysilan, Diphenylsilandiol, Diphenylmethylethoxysilan, Dimethyldiisopropoxysilan, Dimethyldi-n-propoxysilan, Dimethyldichlorsilan, Dimethyldiacetoxysilan, Trifluormethansulfonsäuredimethylsilyldiester, Trifluoressigsäuredimethylsilyldiester. Besonders bevorzugt verwendet werden Trimethylmethoxysilan, Trimethylethoxysilan, Dimethyldimethoxysilan und Dimethyldiethoxysilan. Chlorhaltige Silane werden nur in geringen, den anderen Silan- und Siloxanrohstoffen untergeordneten Mengen eingesetzt. Bevorzugt wird der Einsatz von chlorhaltigen Silanen ganz vermieden.

Ein weiterer Gegenstand der Erfindung ist somit auch ein Verfahren **dadurch gekennzeichnet, dass** als Silane der Formel (6) chlorfreie Silane in denen die Gruppe V = Alkoxy und/oder Acyloxy-Gruppen sind, eingesetzt werden.

Weiterhin können cyclische Siloxane, wie beispielsweise Hexamethylcyclotrisiloxan, Octamethylcyclotetrasiloxan, Decamethylcyclopentasiloxan oder Dodecamethylcyclohexasiloxan, oder auch niedermolekulare Siliconöle mit Kettenlängen von bis zu 20 Siloxyeinheiten eingesetzt werden, um in einem Schritt längere Silikonketten zu inkorporieren. Bevorzugt werden Hexamethyldisiloxan und Decamethylcyclopentasiloxan, einzeln oder im Gemisch verwendet.

Die Silane (6) werden stöchiometrisch oder im molaren Überschuss zu den polyethergebundenen Alkoxysilylgruppen (3) eingesetzt. Zur Vermeidung von intermolekularer Vernetzung und Gelbildung kann es vorteilhaft sein, die reaktiven Silane (6) im Überschuss einzusetzen. Das molare Verhältnis von polyethergebundener Alkoxysilylgruppe zu alkoxyfunktionellem Silan liegt im Bereich von 1 bis 50, vorzugsweise 1 bis 25.

Ein Gegenstand der Erfindung ist daher auch ein Verfahren zur Herstellung von Siliconpolyethercopolymeren der Formel (1), **dadurch gekennzeichnet, dass** alkoxysilylfunktionelle organische Polymere vergelungsfrei durch wahlweise vollständige oder partielle Hydrolyse und Kondensationsreaktion der polymergebundenen Alkoxysilylgruppen zusammen mit reaktiven Silanen, sowie Wasser und in Anwesenheit eines Katalysators umgesetzt werden.

Ein weiterer Gegenstand der Erfindung ist auch ein Verfahren zur Herstellung von Siliconpolyethercopolymeren der Formel (1), **dadurch gekennzeichnet, dass** bezogen auf den molaren Gehalt an Trialkoxysilylgruppen unterstöchiometrische Mengen von Wasser und/oder Monoalkoxysilan pro Trialkoxysilyl-Äquivalent eingesetzt werden.

Ein weiterer Gegenstand der Erfindung ist auch ein Verfahren zur Herstellung von Siliconpolyethercopolymeren der Formel (1), **dadurch gekennzeichnet, dass** mit Alkoxysilylgruppen funktionalisierte Polyether unter hydrolytischen Bedingungen und Säurekatalyse und/oder Metallkomplexkatalyse mit Silanen und/oder Siloxanen, die reaktiv hydrolytisch spalt- und kondensierbar sind, umgesetzt werden.

Ein weiterer Gegenstand der Erfindung ist ein Verfahren, **dadurch gekennzeichnet, dass** Silane der Formel (6) und/oder Siloxane der Formel (5) verwendet werden,

$$U_xSiV_{(4-x)} \qquad (6)$$

wobei
U gleiche oder verschiedene, in Anwesenheit von Wasser und katalytischer Mengen Brönstedt-Säure bei Temperaturen bis 100°C nicht hydrolysierbare Gruppen, V = gleiche oder verschiedene in Anwesenheit von Wasser und katalytischer Mengen Brönstedt-Säure bei Temperaturen bis 100°C hydrolysierbare Gruppen oder Hydroxylgruppen und x = 1, 2 oder 3 darstellen und

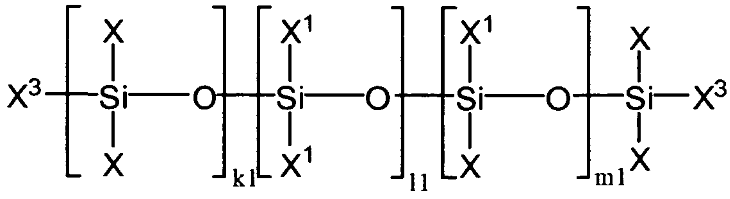

Formel (5)

wobei

| | |
|---|---|
| X und X1 | die in Formel (2) definierte Bedeutung haben, |
| X3 | eine Hydroxylgruppe oder X2 gemäß der Definition in Formel (2) ist, |
| k1 | eine ganze Zahl von 0 bis 200, vorzugsweise 0 bis 50 und insbesondere 0 bis 5 ist |
| 11 | eine ganze Zahl von 0 bis 200, vorzugsweise 0 bis 50 und insbesondere 0 bis 5 ist |
| m1 | eine ganze Zahl von 0 bis 200, vorzugsweise 0 bis 50 und insbesondere 0 bis 5 ist |

mit der Maßgabe, dass die Summe der Indizes k1, I1 und m1 eine ganze Zahl von 1 bis 600, vorzugsweise 1 bis 150 und insbesondere 1 bis 15 ist.

Als Katalysatoren sind organische oder anorganische Brönstedtsäuren wie Essigsäure oder Trifluoressigsäure, Mineralsäuren, wie beispielsweise Schwefelsäure oder Salzsäure, Phosphorsäure deren Mono- und/oder Diester, wie z.B. Butylphosphat, (Iso-) Propylphosphat, Dibutylphosphat etc., aber auch Sulfonsäuren wie beispielsweise Methansulfonsäure, Trifluormethansulfonsäure oder Toluolsulfonsäure geeignet. Außerdem können die nach dem Stand der Technik festen Äquilibriersäuren, das sind saure Tonerden oder saure Ionenaustauscherharze, wie beispielsweise die unter den Markennamen Amberlite®, Amberlyst® oder Dowex® und Lewatit® bekannten Produkte eingesetzt werden. Weiterhin geeignet sind Lewis-Säuren, wie bespielsweise Aluminiumtrichlorid, Titan(IV)-chlorid, Bortrihalogenide oder auch organische Borane mit elektronenziehenden Substituenten wie beispielsweise Fluorarylborane, insbesondere Tris-(Pentafluorophenyl)boran. Als weitere Katalysatoren für die Vernetzung von Alkoxysilylgruppen tragenden Verbindungen können organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., verwendet werden. Besonders bevorzugt ist die Verwendung von Trifluormethansulfonsäure und Trifluoressigsäure.

Die Katalysatoren können einzeln oder auch in Kombination eingesetzt werden. Die benötigten Mengen der Summe an Katalysatoren liegen im Bereich von 0,01 bis 15 Gewichtsprozent, vorzugsweise im Bereich von 0,1 bis 6 Gewichtsprozent.

Ein weiterer Gegenstand der Erfindung ist somit auch ein Verfahren, **dadurch gekennzeichnet, dass** als Katalysator bevorzugt Trifluormethansulfonsäure und/oder Trifluoressigsäure eingesetzt werden.

Die Reaktionsschritte des Verfahrens zur Herstellung der Siliconpolyethercopolymere der Formel (1) bestehen aus der sauer katalysierten Hydrolyse- und Kondensationsreaktion und einem Destillations- und Neutralisationsschritt. Das Verfahren kann stufenweise, semikontinuierlich in einem Loop-Rohrreaktor, kontinuierlich in einem Rohrreaktor oder in einer Eintopfreaktion durchgeführt werden. Die Neutralisation kann vor oder nach der Destillation erfolgen.

Die Hydrolyse- und Kondensationsreaktion kann bei einem Druck von gleich oder größer Normaldruck, vorzugsweise bei dem Druck entsprechend der umgebenden Atmosphäre, und Temperaturen von 0 bis 100°C, vorzugsweise bei 40 bis 80°C, durchgeführt werden. Nach Beendigung der Reaktion können die flüchtigen Nebenprodukte der Kondensation, z. B. durch schonende Vakuumdestillation entfernt werden. Die Destillation kann aus einem Kessel, kontinuierlich über einen Fallfilmverdampfer oder auch durch Verdüsen ins Vakuum erfolgen. Falls erforderlich oder gewünscht kann eine Neutralisation, z. B. mit einem basischen Salz, vorzugsweise mit Natriumhydrogencarbonat, erfolgen.

An den ersten Verfahrensschritt der säurekatalysierten Hydrolyse-, Kondensations- und gegebenenfalls Äquilibrierreaktion kann sich ein zweiter alkalisch katalysierter Äquilibrierschritt anschließen, um weitere Funktionalitäten in die neuartigen Siliconpolyethercopolymere zu inkorporieren. So können beispielsweise cyclische oder lineare Siloxane, die gegebenenfalls weitere funktionelle Gruppen, wie beispielsweise Aminogruppen, enthalten, mit Hilfe von Tetraalkylammoniumverbindungen gemäß dem beispielsweise in der DE 60116592 beschriebenen Stand der Technik einäquilibriert werden.

Die erfindungsgemäß beanspruchten neuartigen Siliconpolyethercopolymere unterscheiden sich vorteilhaft von den in EP 0368195 A1 und EP 0506086 A1 offenbarten Polyethersiloxanen dadurch, dass keine aus der Allyl-propenylumlagerung resultierenden Nebenprodukte, wie beispielsweise nicht terminale Doppelbindungen aufweisende Substituenten, insbesondere Propenylether, und gegebenenfalls auch deren Hydrolyseprodukte enthalten sind. Die erfindungsgemäßen neuartigen Siliconpolyethercopolymere enthalten bevorzugt keine Propenylgruppen.

Damit sind die Produkte nicht nur direkt nach ihrer Herstellung geruchsfrei, sondern sie setzen bei Lagerung zudem keine neuen, unerwünschten Geruchsträger frei.

Weiterhin unterscheiden sich die erfindungsgemäß beanspruchten neuartigen Siliconpolyethercopolymere vorteilhaft von den in EP 0368195 A1 und EP 0506086 A1 offenbarten Polyethersiloxanen durch ihre im Vergleich dazu niedrige Viskosität und ihre gute Lagerstabilität, wie sie durch die Vermeidung der intermolekularen Quervernetzung gewährleistet wird. Wie das in dieser Erfindung offenbarte Vergleichsbeispiel zeigt, steigt die Viskosität eines nach dem in der EP 0506086 A1 offenbarten Verfahren mit Trimethylchlorsilan hergestellten Produktes auf mehr als das Doppelte seiner Ausgangsviskosität.

Weiterhin unterscheiden sich die erfindungsgemäß beanspruchten neuartigen Siliconpolyethercopolymere vorteilhaft von den in EP 0368195 A1 und EP 0506086 A1 offenbarten Polyethersiloxanen dadurch, dass sie gegebenenfalls nicht nur gebundene Siloxanylgruppen enthalten sondern darüber hinaus noch Alkoxysiloxanyl- oder auch Alkoxysilylgruppen einzeln oder im Gemisch enthalten können. Im Gegensatz zu den bekannten Verfahren zur Herstellung von silylfunktionellen Polymeren, handelt es sich bei den erfindungsgemäßen Produkten um siloxanylfunktionelle Polymere, deren chemisch gebundener Siliconanteil frei variiert werden kann.

Weiterhin unterscheiden sich die erfindungsgemäß beanspruchten neuartigen Siliconpolyethercopolymere von den in EP 0368195 A1 und EP 0506086 A1 offenbarten Polyethersiloxanen dadurch, dass sie vorzugsweise eine durch die Edukte vorbestimmte inherente multimodale Molgewichtsverteilung aufweisen, ohne dass deshalb eine Produktverdünnung durch Nebenprodukte wie beispielsweise den in den klassischen Polyethersiloxanen vorhandenen Überschusspolyethern erfolgt. Während des erfindungsgemäßen Verfahrens bleibt die Modalität meist unbeeinflusst. Sofern in den Vorprodukten enthaltene Umesterungsprodukte unter den hydrolytisch sauren Bedingungen ganz oder teilweise gespalten werden, kann sich die Modalität reduzieren, beispielsweise von 3 auf 2 wie im Beispiel 8 offenbart ist.

Das erfindungsgemäße Verfahren hat hinsichtlich der Qualität und Lagerstabilität der Endprodukte den Vorteil, dass die erfindungsgemäß hergestellten Siliconpolyethercopolymere und die daraus gefertigten Folgeprodukte und die Siliconpolyethercopolymere enthaltenden Zusammensetzungen und Formulierungen keine Vergelungsneigung besitzen und somit über einen längeren Zeitraum gelagert werden können, ohne dass sich die Viskosität der Produkte maßgeblich verändert.

Ein weiterer Gegenstand der Erfindung sind Zusammensetzungen enthaltend Siliconpolyethercopolymere gemäß Formel (1) und weitere Silicontenside, organische Tenside, Lösungsmittel wie beispielsweise Alkane, halogenierte Alkane, substituierte oder unsubstituierte Aromaten, Ester, Ether, Glykole, Öle natürlicher und synthetischer Herkunft oder Polyether, Amine, Amide, Säuren, Basen oder deren Puffersysteme zur pH-Wert-Einstellung, Flammschutzmittel, Katalysatoren, Antioxidantien, Additive zur Steuerung der rheologischen Eigenschaften, wie beispielsweise Verdicker, Netzmittel oder Verlaufsmittel, Dispergieradditive, feste anorganische oder feste organische Füllstoffe, Partikel, Bindemittel, feste oder flüssige Farbstoffe, Stabilisatoren, UV-Absorbern, Bioziden und/oder Antistatika.

Das erfindungsgemäße Verfahren hat gegenüber dem in EP-A1-0 506 086 beschriebenen Verfahren weiterhin den Vorteil, dass durch die Vermeidung des Einsatzes von Chlorsilanen kein korrosives Abgas und keine chlororganischen Verbindungen auftreten. Besonders vorteilhaft gegenüber dem in EP-A1-0 368 195 beschriebenen Verfahren kann auf eine destillative Aufreinigung der als Edukte verwendeten Silane und Siloxane verzichtet werden.

Das erfindungsgemäße Verfahren erlaubt ferner die Synthese von Siliconpolyethern der Formel (1), die freie reaktive Alkoxysilylgruppen tragen. Solche Verbindungen, bei denen Index a1 in Formel (1) im Mittel größer als 0 ist und die pro Molekül mindestens eine Si-O-R-Funktion aufweisen, entstehen bei Einsatz eines Unterschusses an Wasser und reaktiven Gruppen U im Silan der Formel (6) in Relation zu den Si-O-R-Gruppen des eingesetzten Silylpolyethers der Formel (3). Weitere Gegenstände der Erfindung ergeben sich aus den Ansprüchen, deren Offenbarungsgehalt vollumfänglich Teil der Beschreibung dieser Erfindung ist.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

GPC-Messungen zur Bestimmung der Polydispersität und mittleren Molmassen wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

OH-Zahlen wurden nach der Kaltacetylierungsmethode in Anlehnung an die Analysenvorschrift C-V 17A (98) der Deutschen Gesellschaft für Fettwissenschaft (DGF) ermittelt.

Der Epoxidsauerstoffgehalt der Silylpolyether wurde in Gegenwart von HCl conc. nach dem Prinzip der Rücktitration mit Natronlauge bestimmt.

Die Viskositäten wurden in Anlehnung an die DIN 53019 mit einem Rotationsviskosimeter der Marke Haake RV12 bei

25°C gemessen. Das Verhältnis der M, D und T-Einheiten zueinander wurde per $^{29}$Si-NMR-Spektroskopie an einem NMR-Spektrometer der Firma Bruker und einer Frequenz von 79,4 MHz bestimmt. Die NMR-Analysenmethode und Auswertung der Signale ist in Fachbüchern beschrieben und somit dem Fachmann geläufig. (Literatur: A. J. Brandolini, D. D. Hills, "NMR-Spectra of Polymers and Polymer Additives" © 2000 Marcel Dekker Inc., Kapitel IX.B.1. auf Seiten 414 ff.) Die in den folgenden Beispielen beobachteten geringen Abweichungen der gemessenen M/T-Verhältnisse vom theoretischen Wert 3:1 ist ein Maß für den erreichten Umsetzungsgrad. So bedeutet beispielsweise ein M/T-Verhältnis von 2,4:1, dass 80% der im Vorprodukt vorhandenen Alkoxysubstituenten durch Trimethylsiloxygruppen substituiert wurden. Bedingt durch die Fourier-Analyse und die gewählten Wichtungsfaktoren, sowie den vorhandenen Rauschpegel der Spektren treten zusätzlich Abweichungen zwischen den graphisch bestimmten Signalverhältnissen und den theoretisch bestimmten Werten auf. Ein gemessenes M/T-Verhältnis von 2,9:1 kann aufgrund der methodischen Messunsicherheit im Bereich des theoretischen Wertes von 3:1 liegen.

Es wurden folgende Alkoxysilylgruppen enthaltende Polyether eingesetzt, die gemäß dem in der noch nicht offengelegten Schrift DE 10 2008 000360.3 nach dem Verfahrensprinzip der DMC-katalysierten Alkoxylierung von 3-Glycidyloxypropyltriethoxysilan (GLYEO) mit Propylenoxid (PO) und Ethylenoxid (EO) hergestellt wurden:

Silylpolyether SP-1:

Niedermolekularer, Allylalkohol-gestarteter, fast farbloser, niedrig viskoser Polyether der mittleren Molmasse von ca. 1800 g/mol und zweifacher Trialkoxysilanfunktionalität.

Chemischer Aufbau gemäß Monomerendosage:

Allylalkohol + (7,6 mol PO / 15 mol EO) + 2 mol GLYEO + 1 mol PO

Epoxidsauerstoffgehalt <0,05 %, OH-Zahl 28,0 g/mol

Silylpolyether SP-2:

Kurzkettiger Allylalkohol-basierender, niedrig viskoser Polyether der mittleren Molmasse ca. 1350 g/mol und zweifacher Trialkoxysilanfunktionalität.

Chemischer Aufbau gemäß Monomerendosage:

Poly(propylen-co-ethylenglykol)monoallylether (600 g/mol) + 2 mol Propylenoxid + 2 mol GLYEO + 1 mol Propylenoxid Epoxidsauerstoffgehalt <0,05 %, $M_w$ lt. GPC 4150 g/mol, Viskosität 291,4 mPa*s (25°C)

Silylpolyether SP-3:

Kurzkettiger Allylalkohol-basierender, niedrig viskoser Polyether der mittleren Molmasse ca. 1100 g/mol und zweifacher Trialkoxysilanfunktionalität.

Chemischer Aufbau gemäß Monomerendosage:

Polyethylenglykolmonoallylether (400 g/mol) + 2 mol Propylenoxid + 2 mol GLYEO + 1 mol Propylenoxid Epoxidsauerstoffgehalt <0,05 %, Viskosität 146,0 mPa*s (25°C) Das GPC zeigt eine multimodale Kurve mit Maxima bei etwa 250, 700 und 3000 g/mol, eine massenmittlere Molmasse Mw von 4153 g/mol und eine Polydispersität Mw/Mn von 2,59.

Silylpolyether SP-4:

Niedermolekularer, Octanol-gestarteter, fast farbloser und niedrig viskoser Polyether der mittleren Molmasse von ca. 3000 g/mol und siebenfacher Trialkoxysilanfunktionalität.

Chemischer Aufbau gemäß Monomerendosage:

1-Octanol + 8 mol Propylenoxid + (7 mol GLYEO / 10 mol Propylenoxid)

Epoxidsauerstoffgehalt <0,05 %, OH-Zahl 19,5 mg KOH/g, $M_w$ lt. GPC 2760 g/mol, Viskosität (25,0 °C) 238,3 mPa*s

Silylpolyether SP-5:

Hochmolekularer Polypropylenglygol-gestarteter, fast farbloser und viskoser Polyether der mittleren Molmasse ca. 15400 g/mol und sechsfacher Trialkoxysilanfunktionalität.

Chemischer Aufbau gemäß Monomerendosage:

PPG(2000 g/mol) + 198 mol PO + 6 mol GLYEO + 4 mol PO

Epoxidsauerstoffgehalt <0,05 %, Das GPC zeigt eine multimodale Kurve mit Maxima bei etwa 5.500, 10.000 und 20.000 g/mol, eine massenmittlere Molmasse Mw von 15.552 g/mol und eine Polydispersität Mw/Mn von 2,52.

Beispiele:

Beispiel 1 (erfindungsgemäß)

In einem 250 ml Vierhalskolben ausgestattet mit einem KPG-Rührer, einem Innenthermometer, einem Tropftrichter und einer Destillationsbrücke werden 30 g Trimethylethoxysilan bei Raumtemperatur vorgelegt und unter Rühren 0,45 ml Trifluoressigsäure zugegeben. Nach Aufheizen auf 60°C wird eine Mischung aus 37,2 g Silylpolyether SP-1 und 20,16 g entsalztem Wasser über einen Zeitraum von einer Stunde zugetropft. Die trübe Reaktionsmischung wird nach beendeter Zudosage drei Stunden bei 60°C gerührt. Es werden 3 g Natriumhydrogencarbonat zugegeben und eine halbe Stunde bei Raumtemperatur gerührt. Nach Filtration über einen Faltenfilter erhält man eine klare Lösung. Das aus der Reaktion entstandene Ethanol wird bei 70°C und 5 bis 15 mbar innerhalb von 45 Minuten abdestilliert. Man erhält ein klares, homogenes, niederviskoses ( < 250 mPa*s) Produkt. In dem $^{29}$Si-NMR Spektrum sind keine Signale der Ausgangsverbindungen mehr erkennbar. Das Verhältnis von M-Einheiten zu T-Einheiten beträgt 2,9 zu 1 (Theorie 3:1).

Beispiel 2 (erfindungsgemäß)

In einem 250 ml Vierhalskolben ausgestattet mit einem KPG-Rührer, einem Innenthermometer, einem Tropftrichter und einer Destillationsbrücke werden 31,8 g Trimethylethoxysilan bei Raumtemperatur vorgelegt und unter Rühren 0,42 ml Trifluoressigsäure zugegeben. Nach Aufheizen auf 60°C wird eine Mischung aus 30,0 g Silylpolyether SP-2 und 21,4 g entsalztem Wasser über einen Zeitraum von 1,5 Stunden zugetropft. Die trübe Reaktionsmischung wird nach beendeter Zudosage drei Stunden bei 60°C gerührt. Das während der Reaktion entstandene Ethanol wird bei 60°C und 50 mbar innerhalb von einer Stunde abdestilliert. Es werden 1,7 g Natriumhydrogencarbonat zugegeben und eine halbe Stunde bei Raumtemperatur gerührt. Nach Filtration über einen Faltenfilter erhält man ein klares, homogenes, gelbliches Produkt mit einer Viskosität von 204 mPa*s bei 25°C. In dem $^{29}$Si-NMR Spektrum sind keine Signale der Ausgangsverbindungen mehr erkennbar. Das Verhältnis von M-Einheiten zu T-Einheiten beträgt 2,7 zu 1 (Theorie 3:1).

Beispiel 3 (erfindungsgemäß)

In einem 250 ml Vierhalskolben ausgestattet mit einem KPG-Rührer, einem Innenthermometer, einem Tropftrichter und einer Destillationsbrücke werden 21,8 g Hexamethyldisiloxan bei Raumtemperatur vorgelegt und unter Rühren 0,42 ml Trifluoressigsäure zugegeben. Nach einstündigem Rühren bei 70°C wird eine Mischung aus 30,0 g Silylpolyether SP-2 und 21,4 g entsalztem Wasser über einen Zeitraum von einer Stunde zugetropft. Die trübe Reaktionsmischung wird nach beendeter Zudosage drei Stunden bei 70°C gerührt. Das während der Reaktion entstandene Ethanol wird bei 70°C und 20 mbar innerhalb von einer Stunde abdestilliert. Es werden 1,7 g Natriumhydrogencarbonat zugegeben und eine halbe Stunde bei Raumtemperatur gerührt. Nach Filtration über einen Faltenfilter erhält man ein klares, homogenes, gelbliches Produkt mit einer Viskosität von 294,2 mPa*s bei 25°C.

Beispiel 4 (nicht erfindungsgemäß)

In einem 250 ml Vierhalskolben ausgestattet mit einem KPG-Rührer, einem Innenthermometer, einem Tropftrichter und einer Destillationsbrücke werden 29,2 g Trimethylchlorsilan bei 50°C vorgelegt. Eine Mischung aus 30,0 g Silylpolyether SP-2 und 24,2 g entsalztem Wasser werden über einen Zeitraum von einer Stunde bei 50°C zugetropft. Die trübe Reaktionsmischung wird nach beendeter Zudosage drei Stunden bei 50°C gerührt. Das während der Reaktion freigesetzte, saure Abgas färbt ein angefeuchtetes pH-Papier rot. Nach beendeter Reaktion werden alle flüchtigen Bestandteile bei 50°C und 20 mbar eine Stunde abdestilliert. Es werden 1,7 g Natriumhydrogencarbonat zugegeben und eine halbe Stunde bei Raumtemperatur gerührt. Nach Filtration über einen Faltenfilter erhält man ein klares, gelbliches Produkt mit einer gegenüber dem Silylpolyether SP-2 mehr als verdoppelten Viskosität von 720 mPa*s. Das aus dem $^{29}$Si-NMR Spektrum bestimmte Verhältnis von M-Einheiten zu T-Einheiten beträgt 0,9 zu 1 (Theorie 3:1).

Beispiel 5 (erfindungsgemäß)

In einem 250 ml Vierhalskolben ausgestattet mit einem KPG-Rührer, einem Innenthermometer, einem Tropftrichter und einer Destillationsbrücke werden 37,7 g Trimethylethoxysilan und 11,8 g Decamethylcyclopentasiloxan bei Raumtemperatur vorgelegt und unter Rühren 0,5 ml Trifluoressigsäure zugegeben. Nach einstündigem Rühren bei 70°C wird eine Mischung aus 30,0 g Silylpolyether SP-3 und 13,6 g entsalztem Wasser über einen Zeitraum von einer Stunde zugetropft. Die trübe Reaktionsmischung wird nach beendeter Zudosage drei Stunden bei 70°C gerührt. Der aus der Reaktion entstandene Ethanol wird bei 70°C und 50 mbar eine Stunde abdestilliert. Es werden 1,7 g Natriumhydrogencarbonat zugegeben und eine halbe Stunde bei Raumtemperatur gerührt. Nach Filtration über einen Faltenfilter erhält man ein klares, homogenes, gelbliches Produkt mit einer Viskosität von 87,5 mPa*s. In dem $^{29}$Si-NMR Spektrum sind keine Signale der Ausgangsverbindungen mehr erkennbar. Das Verhältnis von M-Einheiten zu D- und T-Einheiten beträgt 2,7:2,6:1 (Theorie 3:3:1). Das GPC zeigt eine multimodale Kurve mit Maxima bei etwa 500, 900 und 1400 g/mol, eine massenmittlere Molmasse Mw von 1256 g/mol und eine Polydispersität Mw/Mn von 1,47.

Beispiel 6 (erfindungsgemäß)

In einem 250 ml Vierhalskolben ausgestattet mit einem KPG-Rührer, einem Innenthermometer, einem Tropftrichter und einer Destillationsbrücke werden 37,7 g Trimethylethoxysilan bei Raumtemperatur vorgelegt und unter Rühren 0,7 g Dibutylzinndiacetylacetonat zugegeben. Nach Aufheizen auf 70°C wird eine Mischung aus 30,0 g Silylpolyether SP-3 und 13,6 g entsalztem Wasser über einen Zeitraum von 1,5 Stunden zugetropft. Die trübe Reaktionsmischung wird nach beendeter Zudosage drei Stunden bei 70°C gerührt. Die flüchtigen Reaktionsprodukte werden bei 70°C und 20 mbar eine Stunde abdestilliert. Man erhält ein homogenes, leicht trübes, gelbliches, niederviskoses Produkt.

Beispiel 7 (erfindungsgemäß)

In einem 250 ml Vierhalskolben ausgestattet mit einem KPG-Rührer, einem Innenthermometer, einem Tropftrichter und einer Destillationsbrücke werden 54,0 g Trimethylethoxysilan bei Raumtemperatur vorgelegt und unter Rühren 0,5 ml Trifluoressigsäure zugegeben. Nach 30 minütigem Rühren bei 70°C wird eine trübe Mischung aus 30,0 g Silylpolyether SP-4 und 41,1 g entsalztem Wasser über einen Zeitraum von 1,5 Stunden zugetropft. Die trübe Reaktionsmischung wird nach beendeter Zudosage drei Stunden bei 70°C gerührt. Der aus der Reaktion entstandene Ethanol wird bei 70°C und 20 mbar eine Stunde abdestilliert. Es werden 1,7 g Natriumhydrogencarbonat zugegeben und eine halbe Stunde bei Raumtemperatur gerührt. Nach Filtration über einen Faltenfilter erhält man ein klares, homogenes, gelbliches Produkt mit einer Viskosität von 217,6 mPa*s bei 25°C. In dem $^{29}$Si-NMR Spektrum sind keine Signale der Ausgangsverbindungen mehr erkennbar. Das Verhältnis von M-Einheiten zu T-Einheiten beträgt 2,2 zu 1 (Theorie 3:1).

Beispiel 8 (erfindungsgemäß)

In einem 250 ml Vierhalskolben ausgestattet mit einem KPG-Rührer, einem Innenthermometer, einem Tropftrichter und einer Destillationsbrücke werden 16,4 g Trimethylethoxysilan bei Raumtemperatur vorgelegt und 0,5 ml Trifluoressigsäure zugegeben und 30 Minuten bei 70°C gerührt. 60,0 g des hochviskosen Silylpolyethers SP-5 werden zur einfacheren Dosage mit 20,0 g Ethanol versetzt und mit 12,5 g entsalztem Wasser beaufschlagt. Diese Mischung wird in das angesäuerte Silan bei 70°C unter Rühren über einen Zeitraum von 1,5 Stunden zugetropft. Die trübe Reaktionsmischung wird nach beendeter Zudosage drei Stunden bei 70°C gerührt. Nach Abdestillation des Ethanols bei 70°C und 20 mbar erhält man ein klares, homogenes Produkt, welches weniger zähflüssig als der Silylpolyether SP-5 ist. In dem $^{29}$Si-NMR Spektrum sind keine Signale der Ausgangsverbindungen mehr erkennbar. Das Verhältnis von M-Einheiten zu T-Einheiten beträgt 2,4 zu 1 (Theorie 3:1). Das GPC zeigt eine multimodale Kurve mit Maxima bei etwa 5.500 und 10.000 g/mol, eine massenmittlere Molmasse Mw von 9561 g/mol und eine Polydispersität Mw/Mn von 1,85.

## Patentansprüche

1. Propenylgruppenfreie Siliconpolyethercopolymere der Formel (1)

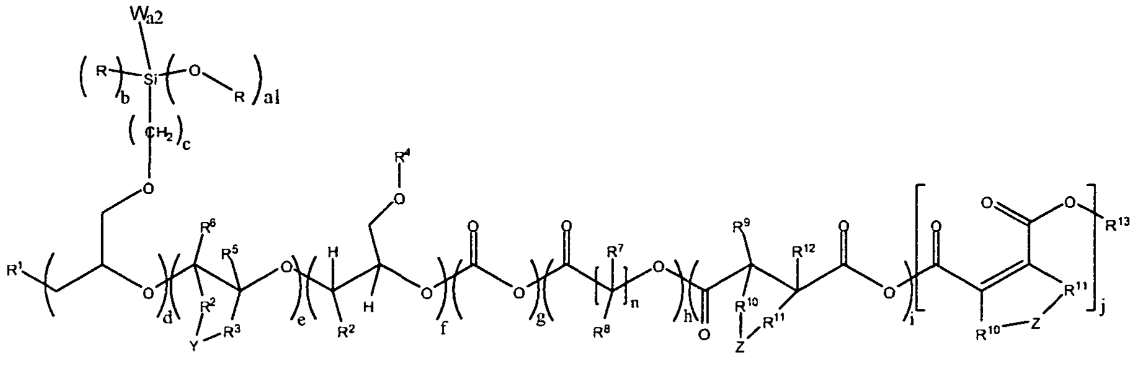

Formel (1)

wobei

a1 eine ganze Zahl von 0, 1 oder 2 ist,
a2 eine ganze Zahl von 1, 2 oder 3 ist,
b eine ganze Zahl von 0, 1 oder 2 ist und die Summe von a1, a2 und b gleich 3 ist,
c eine ganze Zahl von 0 bis 22 ist,
d eine ganze Zahl von 1 bis 500 ist,
e eine ganze Zahl von 0 bis 10.000 ist,
f eine ganze Zahl von 0 bis 1.000 ist,
g eine ganze Zahl von 0 bis 1.000 ist,
h, i und j unabhängig voneinander ganze Zahlen von 0 bis 500 sind,
n eine ganze Zahl zwischen 2 und 8 ist und
R unabhängig voneinander einen oder mehrere gleiche oder verschiedene Reste, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen darstellt; sowie,
$R^1$ ist eine Hydroxylgruppe oder ein gesättigter oder ungesättigter linearer, verzweigter oder cyclischer oder weiter substituierter oxyorganischer Rest mit 1 bis 1.500 Kohlenstoffatomen, wobei die Kette auch durch Heteroatome wie O, S, Si oder N unterbrochen sein kann, oder ein oxyaromatisches System enthaltender Rest oder $R^1$ ist eine ungesättigte etherfunktionelle Gruppe, bei der keine C-C Doppelbindung β-ständig zu einem Sauerstoff ist oder C-C Doppelbindungen nur endständig vorliegen,
$R^2$ oder $R^3$ sind gleich oder auch unabhängig voneinander H und/oder ein gesättigter und/oder einfach und/oder mehrfach ungesättigter, auch weiter substituierter, gegebenenfalls ein- oder mehrwertiger Kohlenwasserstoffrest, wobei die Reste $R^2$ und $R^3$ cycloaliphatisch über das Fragment Y verbrückt sein können; Y kann nicht

vorhanden sein, oder aber eine Methylenbrücke mit 1 oder 2 Methyleneinheiten sein; ist Y nicht vorhanden, so ist der Kohlenwasserstoffrest für $R^2$ oder $R^3$ unabhängig voneinander ein linearer oder verzweigter Rest mit 1 bis 20 Kohlenstoffatomen; $R^5$ oder $R^6$ sind gleich oder auch unabhängig voneinander H und/oder ein gesättigter und/oder einfach und/oder mehrfach ungesättigter, auch weiter substituierter einwertiger Kohlenwasserstoffrest; $R^4$ entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann;
$R^7$ und $R^8$ sind unabhängig voneinander entweder Wasserstoff, Alkyl-, Alkoxy-, Aryl- oder Aralkylgruppen,
$R^9$, $R^{10}$, $R^{11}$ und $R^{12}$ sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein kann und Z sowohl einen divalenten Alkylen- als auch Alkenylenrest darstellen kann,
$R^{13}$ ist entweder Wasserstoff oder W, besonders bevorzugt Wasserstoff,
W stellt einen organomodifizierten Silyl- oder Siloxanylrest der Formel (2) dar

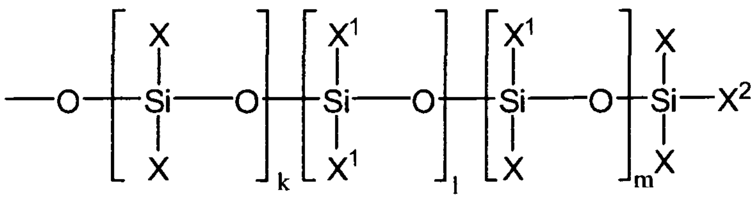

Formel (2)

wobei

k eine ganze Zahl von 0 bis 200 ist,
l ine ganze Zahl von 0 bis 200 ist,
m eine ganze Zahl von 0 bis 200 ist,
X ein linearer, cyclischer oder verzweigter, aliphatischer oder aromatischer, gesättigter oder ungesättigter Kohlenwasserstoffrest mit 1 bis 20 Kohlenstoffatomen ist, der ggfs. Heteroatome wie Sauerstoff, Stickstoff, Phosphor oder Schwefel enthalten kann,
$X^1$ Wasserstoff oder ein linearer, cyclischer oder verzweigter, aliphatischer oder aromatischer, gesättigter oder ungesättigter Kohlenwasserstoffrest mit 1 bis 20 Kohlenstoffatomen ist und Heteroatome wie Sauerstoff, Stickstoff, Phosphor oder Schwefel enthalten kann, jedoch unterschiedlich von X ist,
$X^2$ X, $X^1$ oder eine Alkoxygruppe ist, mit der Maßgabe, dass die Summe der Fragmente d bis j größer gleich 3 ist wenn $R^1$ nur aus einem Monomer oder Oligomer besteht und mit der Maßgabe, dass die Fragmente mit den Indices d, e, f, und/oder h untereinander sowie die Fragmente mit den Indices k, l und/oder m untereinander frei permutierbar, das heißt innerhalb der Polyetherkette beziehungsweise der Siloxankette gegeneinander austauschbar sind und wahlweise statistisch verteilt oder blockartig aneinandergereiht vorliegen können und damit in der Sequenz innerhalb der Polymerkette gegeneinander austauschbar sind.

2. Siliconpolyethercopolymere gemäß Formel (1) nach Anspruch 1 mit der Maßgabe, dass $R^1$ ein Hydroxylrest oder ein gesättigter, gegebenenfalls verzweigter oxyorganischer Rest ist oder ungesättigt ist, jedoch keine nichtaromatische C-C-Doppelbindung β-ständig zu einem Sauerstoff enthält.

3. Siliconpolyethercopolymere gemäß Formel (1) nach Anspruch 1 oder 2 mit der Maßgabe, dass $R^1$ ein gesättigter Alkoxy oder Polyetherrest ist.

4. Zusammensetzungen enthaltend Siliconpolyethercopolymere gemäß Formel (1) nach zumindest einem der Ansprüche 1 bis 3 und weitere Silicontenside, organische Tenside, Lösungsmittel wie beispielsweise Alkane, halogenierte Alkane, substituierte oder unsubstituierte Aromaten, Ester, Ether, Glykole, Öle natürlicher und synthetischer Herkunft oder Polyether, Amine, Amide, Säuren, Basen oder deren Puffersysteme zur pH-Wert-Einstellung, Flammschutzmittel, Katalysatoren, Antioxidantien, Additive zur Steuerung der rheologischen Eigenschaften, wie beispielsweise Verdicker, Netzmittel oder Verlaufsmittel, Dispergieradditive, feste anorganische oder feste organische Füllstoffe, Partikel, Bindemittel, feste oder flüssige Farbstoffe, Stabilisatoren, UV-Absorbern, Bioziden und/oder Antistatika.

5. Verfahren zur Herstellung von Siliconpolyethercopolymeren der Formel (1) nach zumindest einem der Ansprüche 1 bis 4, **dadurch gekennzeichnet, dass** alkoxysilylfunktionelle organische Polymere vergelungsfrei durch wahlweise vollständige oder partielle Hydrolyse und Kondensationsreaktion der polymergebundenen Alkoxysilylgruppen zusammen mit reaktiven Silanen, sowie Wasser und in Anwesenheit eines Katalysators umgesetzt werden.

6. Verfahren zur Herstellung von Siliconpolyethercopolymeren der Formel (1) nach Anspruch 5, **dadurch gekennzeichnet, dass** bezogen auf den molaren Gehalt an Trialkoxysilylgruppen unterstöchiometrische Mengen von Wasser und/oder Monoalkoxysilan pro Trialkoxysilyl-Äquivalent eingesetzt werden.

7. Verfahren zur Herstellung von Siliconpolyethercopolymeren der Formel (1) nach zumindest einem der Ansprüche 1 bis 4, **dadurch gekennzeichnet, dass** mit Alkoxysilylgruppen funktionalisierte Polyether unter hydrolytischen Bedingungen und Säurekatalyse und/oder Metallkomplexkatalyse mit Silanen und/oder Siloxanen, die reaktiv hydrolytisch spalt- und kondensierbar sind, umgesetzt werden.

8. Verfahren nach Anspruch 7, **dadurch gekennzeichnet, dass** Silane der Formel (6) und/oder Siloxane der Formel (5) verwendet werden,

$$U_xSiV_{(4-x)} \qquad (6)$$

wobei
U gleiche oder verschiedene, in Anwesenheit von Wasser und katalytischer Mengen Brönstedt-Säure bei Temperaturen bis 100°C nicht hydrolysierbare Gruppen, V = gleiche oder verschiedene in Anwesenheit von Wasser und katalytischer Mengen Brönstedt-Säure bei Temperaturen bis 100°C hydrolysierbare Gruppen oder Hydroxylgruppen und x = 1, 2 oder 3 darstellen und

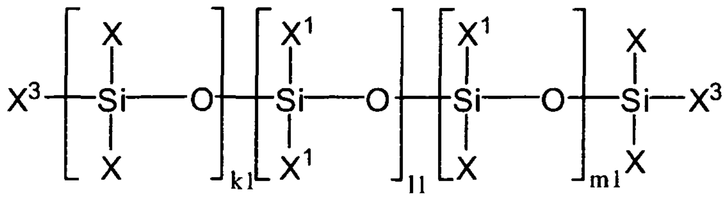

Formel (5)

wobei

X und $X^1$ die in Formel (2) definierte Bedeutung haben,
$X^3$ eine Hydroxylgruppe oder $X^2$ gemäß der Definition in Formel (2) ist,
kl eine ganze Zahl von 0 bis 200, vorzugsweise 0 bis 50 und insbesondere 0 bis 5 ist
ll eine ganze Zahl von 0 bis 200, vorzugsweise 0 bis 50 und insbesondere 0 bis 5 ist
ml eine ganze Zahl von 0 bis 200, vorzugsweise 0 bis 50 und insbesondere 0 bis 5 ist mit der Maßgabe, dass die Summe der Indizes k1, 11 und m1 eine ganze Zahl von 1 bis 600, vorzugsweise 1 bis 150 und insbesondere 1 bis 15 ist.

9. Verfahren nach zumindest einem der Ansprüche 5 bis 8, **dadurch gekennzeichnet, dass** als Silane der Formel (6) chlorfreie Silane mit V = Alkoxy und/oder Acyloxy eingesetzt werden.

10. Verfahren nach zumindest einem der Ansprüche 5 bis 9, **dadurch gekennzeichnet, dass** als Katalysatoren Trifluormethansulfonsäure und/oder Trifluoressigsäure eingesetzt werden.

## Claims

1. Propenyl-free silicone polyether copolymers of the formula (1)

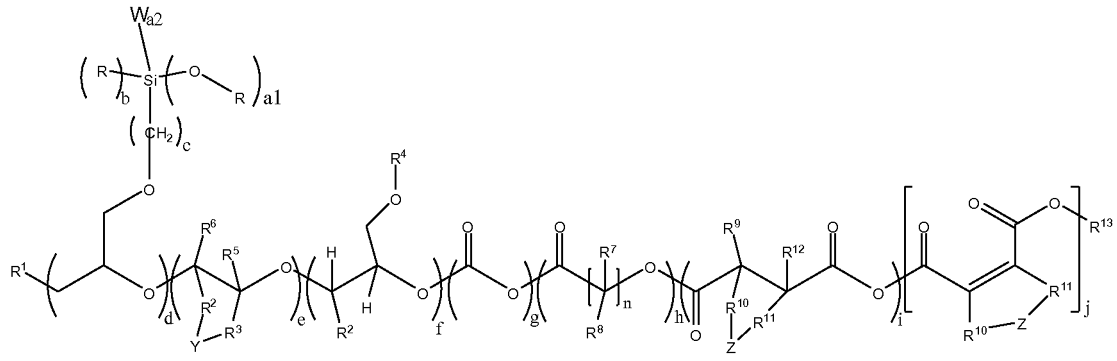

formula (1)

where

a1 is an integer of 0, 1 or 2,
a2 is an integer of 1, 2 or 3,
b is an integer of 0, 1 or 2, and the sum of a1, a2 and b is equal to 3,
c is an integer of 0 to 22,
d is an integer of 1 to 500,
e is an integer of 0 to 10 000,
f is an integer of 0 to 1000,
g is an integer of 0 to 1000,
h, i and j are each independently integers of 0 to 500,
n is an integer from 2 to 8, and
R are independently one or more identical or different radicals selected from linear or branched, saturated, mono- or polyunsaturated alkyl radicals having 1 to 20 carbon atoms or haloalkyl groups having 1 to 20 carbon atoms; and
$R^1$ is a hydroxyl group or a saturated or unsaturated, linear, branched or cyclic or further-substituted oxyorganic radical having 1 to 1500 carbon atoms, where the chain may also be interrupted by heteroatoms such as O, S, Si or N, or a radical comprising an oxyaromatic system, or $R^1$ is an unsaturated ether-functional group in which there is no C-C double bond in a $\beta$ position to an oxygen or C-C double bonds are present only terminally,
$R^2$ or $R^3$ are the same or else independently H and/or a saturated and/or mono- and/or polyunsaturated, also further-substituted, optionally mono- or polyvalent hydrocarbon radical, where the $R^2$ and $R^3$ radicals may be bridged cycloaliphatically via the Y fragment; Y may be absent, or else may be a methylene bridge having 1 or 2 methylene units; when Y is absent, the hydrocarbon radical for $R^2$ or $R^3$ is independently a linear or branched radical having 1 to 20 carbon atoms;
$R^5$ or $R^6$ are the same or else independently H and/or a saturated and/or mono- and/or polyunsaturated, also further-substituted, monovalent hydrocarbon radical;
$R^4$ is a linear or branched alkyl radical of 1 to 24 carbon atoms or an aromatic or cycloaliphatic radical which may optionally in turn bear alkyl groups;
$R^7$ and $R^8$ are each independently hydrogen, alkyl, alkoxy, aryl or aralkyl groups,
$R^9$ $R^{10}$, $R^{11}$ and $R^{12}$ are each independently hydrogen, alkyl, alkenyl, alkoxy, aryl or aralkyl groups, where the hydrocarbon radical may be bridged cycloaliphatically or aromatically via the Z fragment and Z may either be a divalent alkylene or alkenylene radical,
$R^{13}$ is either hydrogen or W, more preferably hydrogen,
Wis an organomodified silyl or siloxanyl radical of the formula (2)

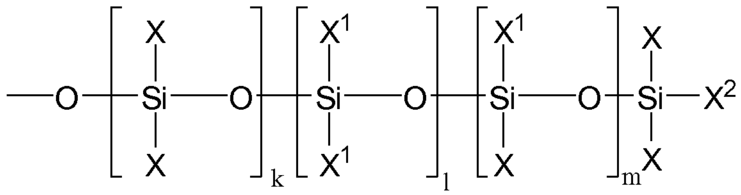

formula (2)

where
kis an integer of 0 to 200, lis an integer of 0 to 200, mis an integer of 0 to 200,

X is a linear, cyclic or branched, aliphatic or aromatic, saturated or unsaturated hydrocarbon radical having 1 to 20 carbon atoms, which may optionally contain heteroatoms such as oxygen, nitrogen, phosphorus or sulphur, $X^1$ is hydrogen or a linear, cyclic or branched, aliphatic or aromatic, saturated or unsaturated hydrocarbon radical having 1 to 20 carbon atoms, and may contain heteroatoms such as oxygen, nitrogen, phosphorus or sulphur, but is different from X,
$X^2$ is X, $X^1$ or an alkoxy group, with the proviso that the sum of the fragments d to j is greater than or equal to 3 when $R^1$ consists only of one monomer or oligomer, and with the proviso that the fragments with the indices d, e, f and/or h are freely permutable with one another, as are the fragments with the indices k, 1 and/or m, i.e. are exchangeable for one another within the polyether chain or the siloxane chain and may be present as desired in random distribution or in block sequence and hence are exchangeable for one another in the sequence within the polymer chain.

**2.** Silicone polyether copolymers of the formula (1) according to Claim 1, with the proviso that $R^1$ is a hydroxyl radical or a saturated, optionally branched oxyorganic radical or is unsaturated, but does not contain a nonaromatic C-C double bond in a $\beta$ position to an oxygen.

**3.** Silicone polyether copolymers of the formula (1) according to Claim 1 or 2, with the proviso that $R^1$ is a saturated alkoxy or polyether radical.

**4.** Compositions comprising silicone polyether copolymers of the formula (1) according to at least one of Claims 1 to 3 and further silicone surfactants, organic surfactants, solvents, for example alkanes, halogenated alkanes, substituted or unsubstituted aromatics, esters, ethers, glycols, oils of natural and synthetic origin or polyethers, amines, amides, acids, bases or buffer systems thereof for pH adjustment, flame retardants, catalysts, antioxidants, additives for control of rheological properties, for example thickeners, wetting agents or levelling agents, dispersing additives, solid inorganic or solid organic fillers, particles, binders, solid or liquid dyes, stabilizers, UV absorbers, biocides and/or antistats.

**5.** Process for preparing silicone polyether copolymers of the formula (1) according to at least one of Claims 1 to 4, **characterized in that** alkoxysilyl-functional organic polymers are reacted, without gelation, by optional full or partial hydrolysis and condensation reaction of the polymer-bound alkoxysilyl groups together with reactive silanes, and also water, and in the presence of a catalyst.

**6.** Process for preparing silicone polyether copolymers of the formula (1) according to Claim 5, **characterized in that** substoichiometric amounts of water and/or monoalkoxysilane, based on the molar content of trialkoxysilyl groups, are used per trialkoxysilyl equivalent.

**7.** Process for preparing silicone polyether copolymers of the formula (1) according to at least one of Claims 1 to 4, **characterized in that** polyethers functionalized with alkoxysilyl groups are reacted under hydrolytic conditions with acid catalysis and/or metal complex catalysis with silanes and/or siloxanes which are reactively hydrolytically cleavable and condensable.

**8.** Process according to Claim 7, **characterized in that** silanes of the formula (6) and/or siloxanes of the formula (5) are used

$U_xSiV_{(4-x)}$ (6)

where

U represent identical or different groups which are unhydrolysable in the presence of water and catalytic amounts of Bronsted acid at temperatures up to 100°C, V = identical or different groups which are hydrolysable in the presence of water and catalytic amounts of Bronsted acid at temperatures up to 100°C, or hydroxyl groups, and x = 1, 2 or 3, and

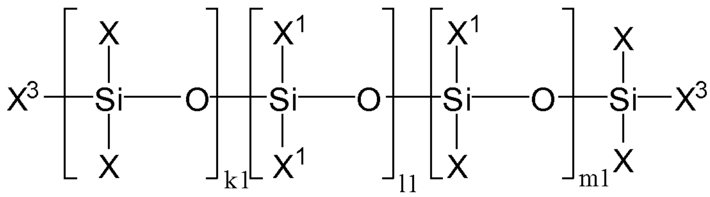

formula (5)

where

X and $X^1$ are each as defined in formula (2),
$X^3$ is a hydroxyl group or $X^2$ as defined in formula (2),
kl is an integer from 0 to 200, preferably 0 to 50 and especially 0 to 5,
ll is an integer from 0 to 200, preferably 0 to 50 and especially 0 to 5,
ml is an integer from 0 to 200, preferably 0 to 50 and especially 0 to 5,

with the proviso that the sum of the indices k1, 11 and m1 is an integer of 1 to 600, preferably 1 to 150 and especially 1 to 15.

**9.** Process according to at least one of Claims 5 to 8, **characterized in that** the silanes of the formula (6) used are chlorine-free silanes where V = alkoxy and/or acyloxy.

**10.** Process according to at least one of Claims 5 to 9, **characterized in that** the catalysts used are trifluoromethanesulphonic acid and/or trifluoroacetic acid.

## Revendications

**1.** Copolymères de silicium-polyéther exempts de groupes propényle de formule (1)

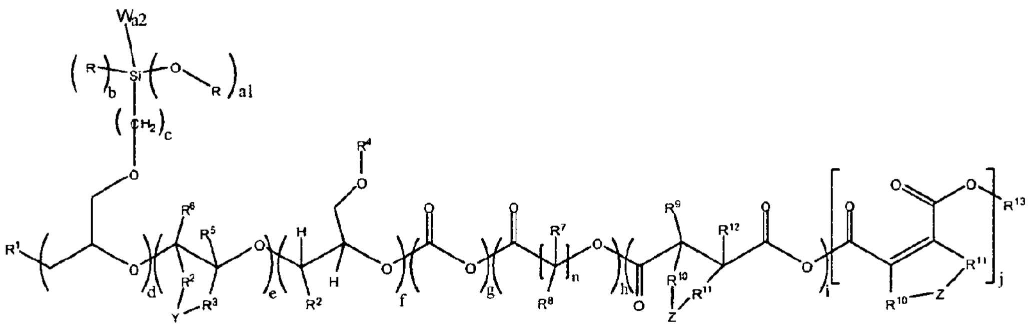

Formule (1)

où

a1 vaut un nombre entier parmi 0, 1 ou 2,
a2 vaut un nombre entier parmi 1, 2 ou 3,
b vaut un nombre entier parmi 0, 1 ou 2 et la somme de a1, a2 et b vaut 3,
c vaut un nombre entier de 0 à 22,
d vaut un nombre entier de 1 à 500,
e vaut un nombre entier de 0 à 10 000,
f vaut un nombre entier de 0 à 1000,
g vaut un nombre entier de 0 à 1000,
h, i et j valent, indépendamment l'un de l'autre, des nombres entiers de 0 à 500,
n vaut un nombre entier entre 2 et 8 et
R représente, indépendamment l'un de l'autre, un ou plusieurs radicaux identiques ou différents, choisis parmi les radicaux alkyle linéaires ou ramifiés, saturés, monoinsaturés ou polyinsaturés comprenant 1 à 20 atomes de carbone ou les groupes halogénoalkyle comprenant 1 à 20 atomes de carbone ; et
$R^1$ représente un groupe hydroxyle ou un radical oxyorganique saturé ou insaturé, linéaire, ramifié ou cyclique ou substitué davantage comprenant 1 à 1500 atomes de carbone, la chaîne pouvant également être interrompue par des hétéroatomes tels que O, S, Si ou N, ou un radical contenant un système oxyaromatique ou $R^1$ représente un groupe insaturé à fonctionnalité éther, dans lequel aucune double liaison C-C ne peut se trouver en position β par rapport à un atome d'oxygène ou dans lequel les doubles liaisons C-C ne se trouvent qu'en position terminale,
$R^2$ ou $R^3$ représentent, en étant identiques ou également indépendamment l'un de l'autre, H et/ou un radical hydrocarboné, saturé et/ou monoinsaturé et/ou polyinsaturé, également substitué davantage, le cas échéant monovalent ou polyvalent, où les radicaux $R^2$ et $R^3$ peuvent former un pont cycloaliphatique via le fragment Y ;
Y peut ne pas être présent ou représenter un pont méthylène comprenant 1 ou 2 unités méthylène ; si Y n'est pas présent, le radical hydrocarboné pour $R^2$ ou $R^3$ représente, indépendamment l'un de l'autre, un radical linéaire ou ramifié comprenant 1 à 20 atomes de carbone ;
$R^5$ ou $R^6$ représentent, en étant identiques ou également indépendamment l'un de l'autre, H et/ou un radical hydrocarboné monovalent saturé et/ou monoinsaturé et/ou polyinsaturé, également substitué davantage ;
$R^4$ représente un radical alkyle linéaire ou ramifié comprenant 1 à 24 atomes de carbone ou un radical aromatique ou cycloaliphatique qui peut à son tour le cas échéant porter des groupes alkyle ;
$R^7$ et $R^8$ représentent, indépendamment l'un de l'autre, soit hydrogène, soit des groupes alkyle, alcoxy, aryle ou aralkyle,
$R^9$, $R^{10}$, $R^{11}$ et $R^{12}$ représentent, indépendamment l'un de l'autre, soit hydrogène, soit alkyle, alcényle, alcoxy, aryle ou aralkyle, le radical hydrocarboné pouvant former un pont cycloaliphatique ou aromatique via le fragment Z et Z pouvant représenter un radical alkylène ainsi que alcénylène divalent,
$R^{13}$ représente soit hydrogène, soit W, de manière particulièrement préférée hydrogène,
W représente un radical silyle ou siloxanyle organomodifié de formule (2)

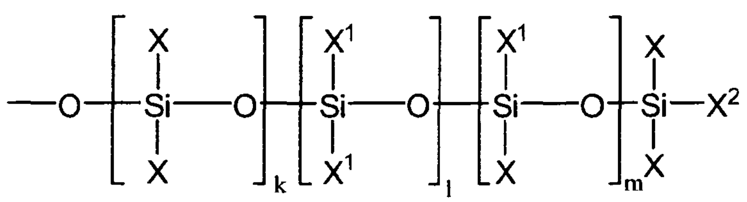

Formule (2)

où

k vaut un nombre entier de 0 à 200,
l vaut un nombre entier de 0 à 200,
m vaut un nombre entier de 0 à 200,
X représente un radical hydrocarboné linéaire, cyclique ou ramifié, aliphatique ou aromatique, saturé ou insaturé comprenant 1 à 20 atomes de carbone, qui peut le cas échéant contenir des hétéroatomes tels que l'oxygène, l'azote, le phosphore ou le soufre,
$X^1$ représente hydrogène ou un radical hydrocarboné linéaire, cyclique ou ramifié, aliphatique ou aromatique, saturé ou insaturé comprenant 1 à 20 atomes de carbone et peut contenir des hétéroatomes tels que l'oxygène, l'azote, le phosphore ou le soufre, mais est différent de X,

$X^2$ représente X, $X^1$ ou un groupe alcoxy, à condition que la somme des fragments d à j soit supérieure à 3 lors que $R^1$ n'est constitué que par un monomère ou oligomère et à condition que les fragments portant les indices d, e, f et/ou h d'une part ainsi que les fragments portant les indices k, l et/ou m d'autre part soient permutables librement entre eux, c'est-à-dire qu'ils sont remplaçables les uns par les autres respectivement dans la chaîne polyéther ou siloxane et peuvent se trouver, au choix, répartis statistiquement ou se succéder sous forme de blocs et sont donc remplaçables les uns par les autres dans la séquence au sein de la chaîne polymère.

**2.** Copolymères de silicium-polyéther selon la formule (1) selon la revendication 1, à condition que $R^1$ représente un radical hydroxyle ou un radical oxyorganique saturé, le cas échéant ramifié ou est insaturé, mais ne contient pas de double liaison C-C non aromatique en position β par rapport à un atome d'oxygène.

**3.** Copolymères de silicium-polyéther selon la formule (1) selon la revendication 1 ou 2, à condition que $R^1$ représente un alcoxy ou un radical polyéther saturé.

**4.** Compositions contenant des copolymères de silicium-polyéther selon la formule (1) selon au moins l'une quelconque des revendications 1 à 3 et d'autres agents tensioactifs à base de silicium, des agents tensioactifs organiques, des solvants tels que par exemple les alcanes, les alcanes halogénés, les aromatiques substitués ou non substitués, les esters, les éthers, les glycols, les huiles d'origine naturelle et synthétique ou les polyéthers, des amines, des amides, des acides, des bases ou leurs systèmes tampon pour le réglage du pH, des agents ignifuges, des catalyseurs, des antioxydants, des additifs pour contrôler les propriétés rhéologiques, tels que par exemple les épaississants, les mouillants ou les agents d'étalement, des additifs de dispersion, des charges solides inorganiques ou solides organiques, des particules, des liants, des colorants solides ou liquides, des stabilisateurs, des absorbants des UV, des biocides et/ou des antistatiques.

**5.** Procédé pour la préparation de copolymères de silicium-polyéther de formule (1) selon au moins l'une quelconque des revendications 1 à 4, **caractérisé en ce que** des polymères organiques à fonctionnalité alcoxysilyle sont transformés sans gélification par une hydrolyse au choix complète ou partielle et une réaction de condensation des groupes alcoxysilyle liés au polymère ensemble avec des silanes réactifs ainsi que de l'eau et en présence d'un catalyseur.

**6.** Procédé pour la préparation de copolymères de silicium-polyéther (1) selon la revendication 5, **caractérisé en ce que** par rapport à la teneur molaire en groupes trialcoxysilyle, des quantités inférieures à la quantité stoechiométrique d'eau et/ou de monoalcoxysilane par équivalent trialcoxysilane sont utilisées.

**7.** Procédé pour la préparation de copolymères de silicium-polyéther de formule (1) selon au moins l'une quelconque des revendications 1 à 4, **caractérisé en ce que** les polyéthers fonctionnalisés par des groupes alcoxysilyle sont transformés dans des conditions hydrolytiques et sous une catalyse par un acide et/ou sous une catalyse par des complexes métalliques avec des silanes et/ou des siloxanes qui peuvent être dissociés et condensés de manière hydrolytique réactive.

**8.** Procédé selon la revendication 7, **caractérisé en ce qu'**on utilise des silanes de formule (6) et/ou des siloxanes de formule (5),

$$U_xSiV_{(4-x)} \qquad (6)$$

où
U représente des groupes identiques ou différents, non hydrolysables en présence d'eau et de quantités catalytiques d'acide de Brönstedt à des températures jusqu'à 100°C, V représente des groupes identiques ou différents, hydrolysables en présence d'eau et de quantités catalytiques d'acide de Brönstedt à des températures jusqu'à 100°C ou des groupes hydroxyle et x = 1, 2 ou 3 et

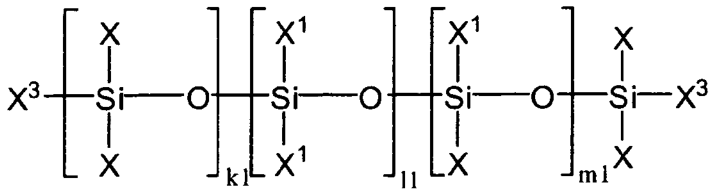

Formule (5)

où

X et $X^1$ présentent la signification définie dans la formule (2),
$X^3$ représente un groupe hydroxyle ou $X^2$ selon la définition dans la formule (2)
kl vaut un nombre entier de 0 à 200, de préférence de 0 à 50, en particulier de 0 à 5
ll vaut un nombre entier de 0 à 200, de préférence de 0 à 50, en particulier de 0 à 5
ml vaut un nombre entier de 0 à 200, de préférence de 0 à 50, en particulier de 0 à 5 à condition que la somme des indices k1, 11 et m1 vaille un nombre entier de 1 à 600, de préférence de 1 à 150 et en particulier de 1 à 15.

**9.** Procédé selon au moins l'une quelconque des revendications 5 à 8, **caractérisé en ce qu'**on utilise comme silanes de formule (6) des silanes exempts de chlore avec V = alcoxy et/ou acyloxy.

**10.** Procédé selon au moins l'une quelconque des revendications 5 à 9, **caractérisé en ce qu'**on utilise comme catalyseurs l'acide trifluorométhanesulfonique et/ou l'acide trifluoroacétique.

Figur 1 - Formel (1)

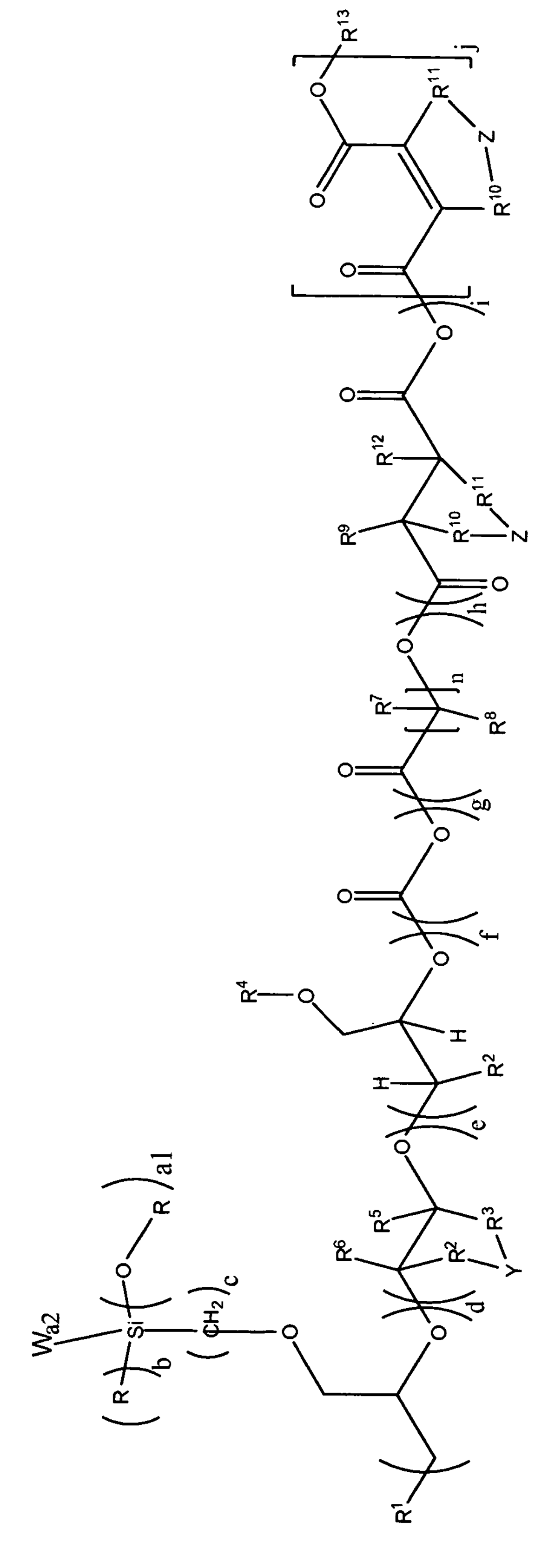

Figur 2 - Formel (3)

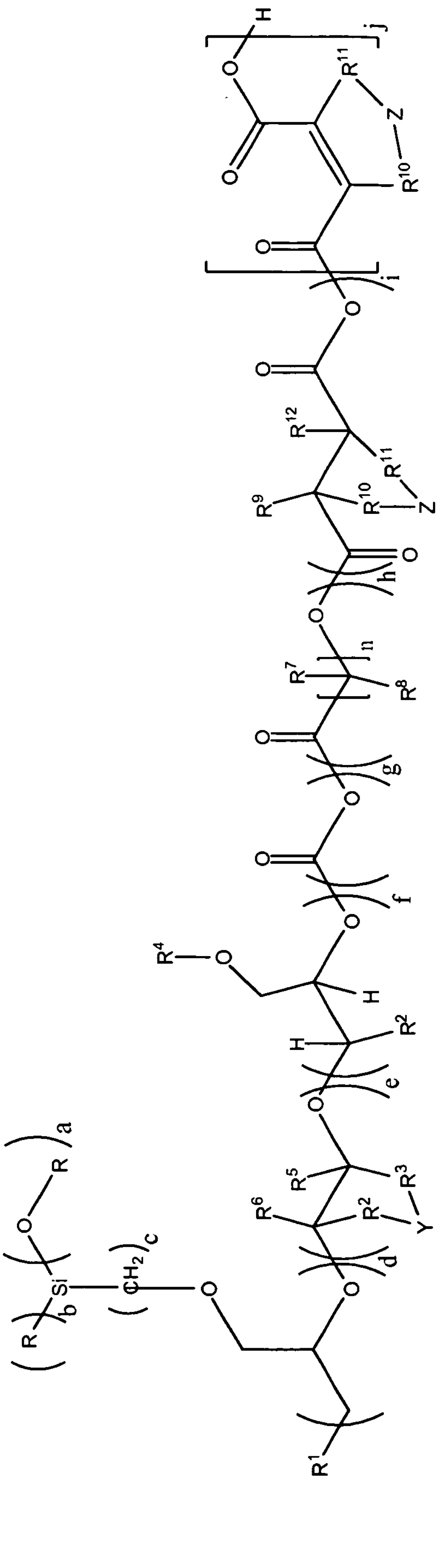

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0368195 A1
- EP 0506086 A1
- WO 2005100482 A
- EP 1967550 A1
- US 7365145 B
- US 3627722 A
- US 3632557 A
- US 3971751 A
- WO 9634030 A
- JP 2005113063 B
- JP 11012473 B
- DE 102008000360
- DE 60116592


### In der Beschreibung aufgeführte Nicht-Patentliteratur


- **J. BRANDOLINI ; D. D. HILLS.** NMR-Spectra of Polymers and Polymer Additives. Marcel Dekker Inc, 2000, 414 ff